# EUROPEAN PATENT APPLICATION

(11) **EP 2 518 777 A1**
(43) Date of publication of application: **31.10.2012**
(21) Application number: 10839457.8
(22) Date of filing: 22.12.2010
(51) Int. Cl.: H01L 31/048, E04D 13/18, H01R 4/26

(54) **SOLAR CELL MODULE MOUNT, SOLAR CELL MODULE FIXING MEMBER, PHOTOVOLTAIC POWER GENERATION SYSTEM USING PHOTOVOLTAIC POWER GENERATION SYSTEM MOUNT**

(30) Priority: 24.12.2009 JP 2009292305
(71) Applicant: Sharp Kabushiki Kaisha, Osaka-shi, Osaka 545-8522 (JP)
(72) Inventor: SAGAYAMA, Kenichi, Osaka 545-8522 (JP)
(74) Representative: Müller - Hoffmann & Partner
(86) International application number: PCT/JP2010/073139
(87) International publication number: WO 2011/078227

(57) **Abstract**

A solar cell module rack for mounting a solar cell module (17) includes a first fixing member (43) mounted on and above a frame member (19) of the solar cell module (17), a horizontal cross-piece mounted on and below the frame member (19) of the solar cell module (17), and a bolt (45) configured to fasten the first fixing member (43) and the horizontal cross-piece together so that the first fixing member (43) and the horizontal cross-piece sandwich the frame member (19) of the solar cell module (17). The first fixing member (43) includes an abutment portion that abuts the frame member (19) of the solar cell module (17). The abutment portion of the first fixing member (43) includes a ring-shaped protrusion (43e) protruding toward the frame member (19) of the solar cell module (17).

## Description

### Technical Field

The present invention relates to solar cell module racks for mounting solar cell modules, solar cell module fixing members for pressing and fixing frames of solar cell modules, and photovoltaic power generation systems with a solar cell module rack.

### Background Art

A solar cell module is typically installed on a roof etc. as follows. A rack for the solar cell module is attached to the roof etc. The solar cell module is mounted and fixed to the rack. Also, a frame etc. of the solar cell module is connected to the ground with a wire in order to remove electrostatic charge caused due to photovoltaic power generation.

However, the solar cell module frame is formed of a conductive metal material, and the outer surface of the frame is covered with an insulating film for preventing corrosion, and therefore, it is difficult to connect the ground wire to the solar cell module frame.

Therefore, for example, Patent Literature 1 proposes a technique of connecting the ground wire easily and reliably. In Patent Literature 1, a minute protrusion is provided on a mounting surface of a solar cell module rack on which a frame of a solar cell module is directly mounted. The minute protrusion digs into the material of the frame to provide electric conduction. As a result, at least the work of connecting the wire to the solar cell module frame can be removed.

### Citation List

### Patent Literature

Patent Literature 1: JP 2007-211435 A

### Summary of Invention

### Technical Problem

However, the minute protrusion provided on the mounting surface in Patent Literature 1 has such a weak strength that, when the frame is pressed against the minute protrusion from the top, the minute protrusion may fall down before diging into the frame. Alternatively, after the minute protrusion digs into the frame, if the position of the solar cell module frame is adjusted or the solar cell module frame is displaced by impact, the minute protrusion may fall down or be broken, and therefore, the electrical connection between the solar cell module and the minute protrusion may not be stably maintained.

For example, when the solar cell module frame is made of aluminum, an insulating oxide film is formed on the surface of the aluminum. Therefore, if the minute protrusion falls down or is broken, or alternatively, is displaced, the minute protrusion may be in contact with the oxide film on the aluminum surface without digging into the aluminum, so that the minute protrusion and the solar cell module frame are electrically insulated from each other.

Therefore, the present invention has been made in view of the above conventional problem. It is an object of the present invention to provide a solar cell module rack and solar cell module fixing member that can facilitate grounding a solar cell module stably, and a photovoltaic power generation system with the solar cell module rack.

### Solution to Problem

To achieve the object, a solar cell module rack according to the present invention is a solar cell module rack for mounting a solar cell module including a frame, including a fixing member mounted on and above the frame of the solar cell module, a rack member mounted on and below the frame of the solar cell module, and a fastening member configured to fasten the fixing member and the rack member together so that the fixing member and the rack member sandwich the frame of the solar cell module. The fixing member includes an abutment portion that abuts the frame of the solar cell module. The abutment portion of the fixing member includes a ring-shaped protrusion protruding toward the frame of the solar cell module.

In the solar cell module rack of the present invention, the fixing member and the rack member are fastened together by the fastening member so that the frame of the solar cell module is sandwiched between the fixing member and the rack member, whereby the ring-shaped protrusion digs into the frame of the solar cell module. The digging of the ring-shaped protrusion establishes conduction between the fixing member and the frame of the solar cell module. Therefore, only by fastening the fastening member, conduction can be established between the frame of the solar cell module and the fixing member, whereby a ground path can be formed via the fixing member for the frame of the solar cell module, and therefore, the work of connecting to the ground using a wire or the like can be significantly facilitated.

The ring-shaped protrusion is in the shape of a ring. Therefore, even if force that tries to cause the ring-shaped protrusion to fall down is applied thereto in any direction, the force can be spread or distributed throughout the ring-shaped protrusion, and the ring-shaped protrusion has high strength against force in any direction. Therefore, even if the position of the solar cell module is adjusted or the solar cell module is displaced by impact after the ring-shaped protrusion digs into the frame of the solar cell module, the ring-shaped protrusion does not fall down or is not broken. Therefore, conduction between the solar cell module and the fixing member is not interrupted, and therefore, the grounding of the solar cell module can be stably maintained.

For example, if the frame of the solar cell module is made of aluminum, and an insulating oxide film is formed on a surface of the aluminum, the ring-shaped protrusion of the fixing member breaks the oxide film of the aluminum surface and digs into the frame of the solar cell module, whereby conduction is established between the aluminum and the fixing member.

The fastening member may be a bolt, a nut, etc. required to assemble the rack. The bolt, the nut, etc. is used at a plurality of points in order to fix the frame of the solar cell module to the rack member. Therefore, if the bolt, the nut, etc. not only is used to fix the frame of the solar cell module, but also serves as the fastening member, an increase in the number of parts can be reduced.

In a solar cell module rack according to an embodiment of the present invention, the fixing member includes a perforated hole, and the ring-shaped protrusion is formed along a circumferential edge of the perforated hole.

With this configuration, for example, after the fixing member including the perforated hole is produced, a pin having an outer diameter slightly larger than the inner diameter of the perforated hole is struck against the inner circumferential edge of the perforated hole with great force, whereby the entire inner circumferential edge of the perforated hole on a side opposite to the pin is caused to protrude. By this process, the ring-shaped protrusion can be easily formed. Therefore, the solar cell module rack having the above configuration can be easily produced.

In a solar cell module rack according to an embodiment of the present invention, the fixing member includes a through hole through which the fastening member is inserted. The perforated hole is located around the through hole. In a solar cell module rack according to another embodiment of the present invention, the fixing member includes a through hole through which the fastening member is inserted, and the through hole is the perforated hole.

In either of the above configurations, the ring-shaped protrusion with a sharp tip is provided in the vicinity of a portion at which the fixing member is fastened. Therefore, the force fastening the fastening member is reliably applied to the ring-shaped protrusion provided in the vicinity of the fastening portion, so that the ring-shaped protrusion with a sharp tip digs into the frame of the solar cell module, whereby conduction is established between the fixing member and the frame of the solar cell module. Moreover, in the latter configuration, the through hole also serves as the perforated hole, and therefore, it is not necessary to provide the perforated hole and the through hole separately. The solar cell module rack having the above configuration can be more easily produced.

In a solar cell module rack according to an embodiment of the present invention, the rack member is a cross-piece on which the frame of the solar cell module is mounted.

The cross-piece is a portion of the rack or a part for the rack, and is not a particular part, and therefore, does not lead to an increase in the number of parts, cost, etc.

On the other hand, a solar cell module fixing member according to the present invention is a solar cell module fixing member for fixing a solar cell module by pressing a frame of the solar cell module. The fixing member includes an abutment portion that abuts the frame of the solar cell module. The abutment portion of the fixing member includes a ring-shaped protrusion protruding toward the frame of the solar cell module.

The solar cell module fixing member of the present invention corresponds to the fixing member of the solar cell module rack of the present invention, and therefore, has similar advantages.

In a solar cell module fixing member according to an embodiment of the present invention, the fixing member includes a perforated hole, and the ring-shaped protrusion is formed along a circumferential edge of the perforated hole. The solar cell module fixing member having this configuration can be easily produced.

A photovoltaic power generation system according to the present invention includes a solar cell module including a frame, and the solar cell module rack of the present invention. The photovoltaic power generation system of the present invention employs the solar cell module rack of the present invention, and therefore, has similar advantages.

A photovoltaic power generation system according to an embodiment of the present invention is a photovoltaic power generation system including the solar cell module rack of the present invention. The frames of a plurality of solar cell modules are each sandwiched and supported by the fixing member and the fastening member.

The above photovoltaic power generation system employs the solar cell module rack of the present invention, and therefore, has similar advantages. Moreover, a plurality of solar cell modules can be supported together by the fixing member and the rack member. Therefore, a photovoltaic power generation system that includes a plurality of solar cell modules, particularly a power plant that includes a large number of solar cell modules, but has a simple configuration, can be provided.

In a photovoltaic power generation system according to an embodiment of the present invention, the fastening member fastens the fixing member and the rack member together with the ring-shaped protrusion of the fixing member digging into the frame of the solar cell module.

In a photovoltaic power generation system according to an embodiment of the present invention, the frame of the solar cell module is formed of a metal material covered with an insulating oxide film. The fixing member is formed of a conductive material. The fastening member fastens the fixing member and the rack member together with the ring-shaped protrusion of the fixing member breaking the oxide film of the frame of the solar cell module to abut the metal material of the frame of the solar cell module.

With this configuration, the ring-shaped protrusion of the fixing member digs into the frame of the solar cell module, i.e., breaks the insulating oxide film covering the metal material to abut the metal material of the frame of the solar cell module. As a result, conduction is established between the ring-shaped protrusion of the fixing member and the metal material of the frame of the solar cell module. Therefore, by grounding the fixing member, the metal material of the frame of the solar cell module can be stably grounded.

In a photovoltaic power generation system according to an embodiment of the present invention, the metal material is made of aluminum or aluminum alloy. The insulating oxide film is a surface oxide film made of aluminum or aluminum alloy. The conductive material is made of a plated steel plate or a steel plate. With this configuration, the conductive material is made of a relatively hard material, and therefore, the ring-shaped protrusion of the fixing member more easily breaks the insulating oxide film covering the metal material. Therefore, by grounding the fixing member, the metal material of the frame of the solar cell module can be stably grounded.

In a photovoltaic power generation system according to an embodiment of the present invention, the fixing member is grounded. Advantageous Effects of Invention

In the present invention, the ring-shaped protrusion protruding toward the frame of the solar cell module is formed on the abutment portion of the fixing member abutting the frame of the solar cell module. Therefore, the fixing member and the rack member are fastened together by the fastening member so that the frame of the solar cell module is sandwiched between the fixing member and the rack member, whereby the ring-shaped protrusion digs into the frame of the solar cell module. The digging of the ring-shaped protrusion establishes conduction between the fixing member and the frame of the solar cell module. Therefore, only by fastening the fastening member, conduction can be established between the frame of the solar cell module and the fixing member, whereby a ground path can be formed via the fixing member for the frame of the solar cell module, and therefore, the work of connecting to the ground using a wire or the like can be significantly facilitated.

The ring-shaped protrusion is in the shape of a ring. Therefore, even if force that tries to cause the ring-shaped protrusion to fall down is applied thereto in any direction, the force can be spread or distributed throughout the ring-shaped protrusion, and the ring-shaped protrusion has high strength against force in any direction. Therefore, even if the position of the solar cell module is adjusted or the solar cell module is displaced by impact after the ring-shaped protrusion digs into the frame of the solar cell module, the ring-shaped protrusion does not fall down or is not broken. Therefore, conduction between the solar cell module and the fixing member is not interrupted, and therefore, the grounding of the solar cell module can be stably maintained.

For example, if the frame of the solar cell module is made of aluminum, and an insulating oxide film is formed on a surface of the aluminum, the ring-shaped protrusion of the fixing member breaks the oxide film of the aluminum surface and digs into the frame of the solar cell module, whereby conduction is established between the frame of the solar cell module and the fixing member.

The fastening member may be a bolt, a nut, etc. required to assemble the rack. The bolt, the nut, etc. is used at a plurality of points in order to fix the frame of the solar cell module to the rack member. Therefore, if the bolt, the nut, etc. not only is used to fix the frame of the solar cell module, but also serves as the fastening member, an increase in the number of parts can be reduced.

### Brief Description of Drawings

[FIG. 1] FIG. 1 is a perspective view showing a photovoltaic power generation system to which a solar cell module rack according to an embodiment of the present invention is applied.
[FIG. 2] FIG. 2 is a back view showing the photovoltaic power generation system of FIG. 1.
[FIG. 3] FIG. 3 is a partially enlarged perspective view showing the photovoltaic power generation system of FIG. 1.
[FIG. 4] FIG. 4 is a perspective view showing a base cross-piece in the solar cell module rack of this embodiment.
[FIG. 5] FIG. 5 is a perspective view showing an arm in the solar cell module rack of this embodiment.
[FIG. 6A] FIG. 6A is a perspective view showing a vertical cross-piece in the solar cell module rack of this embodiment.
[FIG. 6B] FIG. 6B is a plan view showing the vertical cross-piece in the solar cell module rack of this embodiment.
[FIG. 7A] FIG. 7A is a perspective view showing a cross-piece member included in a horizontal cross-piece in the solar cell module rack of this embodiment.
[FIG. 7B] FIG. 7B is a plan view showing the cross-piece member included in the horizontal cross-piece in the solar cell module rack of this embodiment.
[FIG. 8] FIG. 8 is a perspective view showing another cross-piece member included in the horizontal cross-piece in the solar cell module rack of this embodiment.
[FIG. 9] FIG. 9 is a perspective view showing a truss in the solar cell module rack of this embodiment.
[FIG. 10] FIG. 10 is a diagram schematically showing cross-sectional shapes of the base cross-piece, the arm, the horizontal cross-piece, the truss, etc. in the solar cell module rack of this embodiment.
[FIG. 11A] FIG. 11A is a perspective view showing a triangular structure formed of the base cross-piece, the arm, and the vertical cross-piece.
[FIG. 11B] FIG. 11B is a front view showing the triangular structure formed of the base cross-piece, the arm, and the vertical cross-piece.
[FIG. 12] FIG. 12 is a front view showing a connection structure of the arm and the base cross-piece.
[FIG. 13] FIG. 13 is a perspective view showing an attachment member for connecting and fixing the horizontal cross-piece to the vertical cross-piece.
[FIG. 14] FIG. 14 is a perspective view showing a state in which the attachment member is attached to the vertical cross-piece.
[FIG. 15] FIG. 15 is a cross-sectional view showing a state in which the horizontal cross-piece is connected to the vertical cross-piece.
[FIG. 16A] FIG. 16A is a perspective view showing a connection structure of each cross-piece member.
[FIG. 16B] FIG. 16B is a cross-sectional view showing the connection structure of each cross-piece member.
[FIG. 17] FIG. 17 is a front view showing each truss spanning or extending between the base cross-piece and a middle horizontal cross-piece.
[FIG. 18] FIG. 18 is a side view showing each truss of FIG. 17.
[FIG. 19A] FIG. 19A is a perspective view showing a connection member for connecting the base cross-piece and the trusses together in the solar cell module rack of this embodiment.
[FIG. 19B] FIG. 19B is a side view showing the connection member for connecting the base cross-piece and the trusses together in the solar cell module rack of this embodiment.
[FIG. 20A] FIG. 20A is a front view showing a first connection member provided on the middle horizontal cross-piece on the rear side of a solar cell module.
[FIG. 20B] FIG. 20B is a perspective view showing the first connection member as viewed from the rear.
[FIG. 20C] FIG. 20C is a perspective view showing the first connection member as viewed from the front.
[FIG. 21A] FIG. 21A is a perspective view showing the first fixing member provided on the light reception side of a solar cell module as viewed from the top.
[FIG. 21B] FIG. 21B is a side view showing the first fixing member provided on the light reception side of the solar cell module.
[FIG. 21C] FIG. 21C is a perspective view showing the first fixing member provided on the light reception side of the solar cell module as viewed from the bottom.
[FIG. 22A] FIG. 22A is a perspective view showing a second fixing member provided on the light reception side of a solar cell module as viewed from the top.
[FIG. 22B] FIG. 22B is a side view showing the second fixing member provided on the light reception side of the solar cell module.
[FIG. 23] FIG. 23 is a cross-sectional view showing a state in which the first connection member is attached to the middle horizontal cross-piece.
[FIG. 24A] FIG. 24A is a plan view showing a state in which four (upper, lower, left, and right) solar cell modules are attached to the middle horizontal cross-piece using the first connection members and the first fixing members.
[FIG. 24B] FIG. 24B is a cross-sectional view taken along line B-B of FIG. 24A.
[FIG. 24C] FIG. 24C is a cross-sectional view taken along line C-C of FIG. 24A.
[FIG. 25] FIG. 25 is a perspective view showing the state of FIGS. 24A-24C as viewed from the light reception side of a solar cell module.
[FIG. 26] FIG. 26 is a perspective view showing a state in which solar cell modules are attached to the horizontal cross-piece using the first connection members and the second fixing members.
[FIG. 27A] FIG. 27A is a perspective view showing a second connection member provided on an upper and a lower horizontal cross-piece on the rear side of a solar cell module.
[FIG. 27B] FIG. 27B is a plan view showing the second connection member of FIG. 27A.
[FIG. 27C] FIG. 27C is a side view showing the second connection member of FIG. 27A.
[FIG. 28] FIG. 28 is a cross-sectional view showing a state in which the second connection members are attached to the upper and lower horizontal cross-pieces.
[FIG. 29A] FIG. 29A is a plan view showing a state in which two (left and right) solar cell modules are attached to the upper and lower horizontal cross-pieces using the second connection member and the first fixing member.
[FIG. 29B] FIG. 29B is a cross-sectional view taken along line B-B of FIG. 29A.
[FIG. 29C] FIG. 29C is a cross-sectional view taken along line C-C of FIG. 29A.
[FIG. 30] FIG. 30 is a perspective view showing a state in which a solar cell module is attached to the horizontal cross-piece using the second connection member and the second fixing member.
[FIG. 31A] FIG. 31A is a diagram showing a process of forming a ring-shaped protrusion with a sharp tip in a first embodiment.
[FIG. 31B] FIG. 31B is a diagram showing the process for forming a ring-shaped protrusion with a sharp tip in the first embodiment.
[FIG. 32] FIG. 32 is a perspective view showing a state in which the first fixing member is arranged with respect to the frames of solar cell modules.
[FIG. 33] FIG. 33 is an enlarged perspective view showing a state in which the ring-shaped protrusion with a sharp tip along a circumferential edge of a perforated hole of the first fixing member digs into the frames of solar cell modules.
[FIG. 34] FIG. 34 is a perspective view showing a variation of the ring-shaped protrusion with a sharp tip.

### Description of Embodiments

Embodiments of the present invention will be described in detail hereinafter with reference to the accompanying drawings.

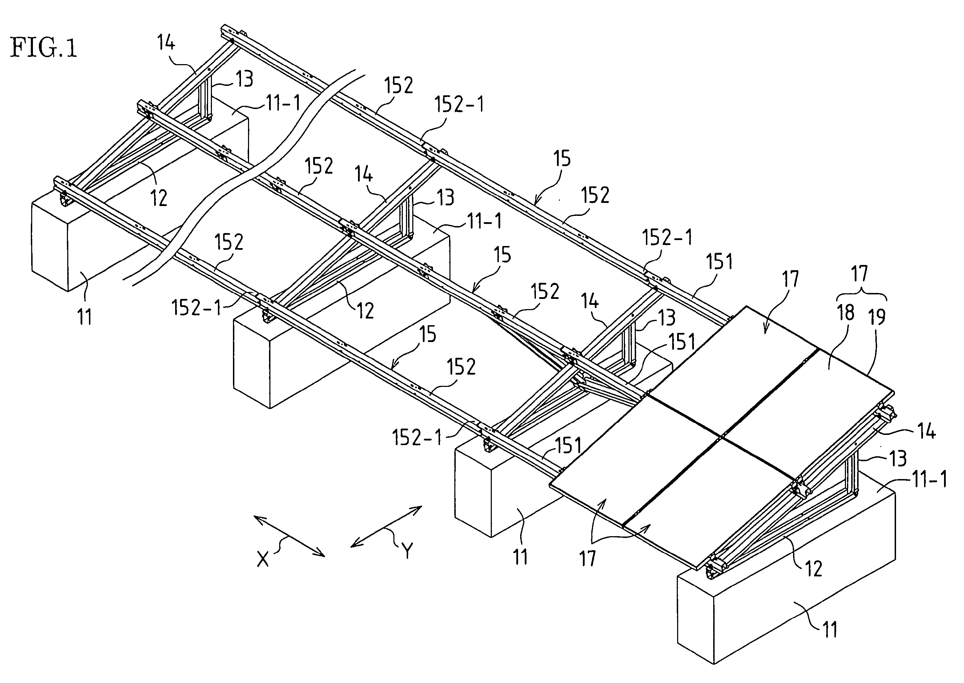

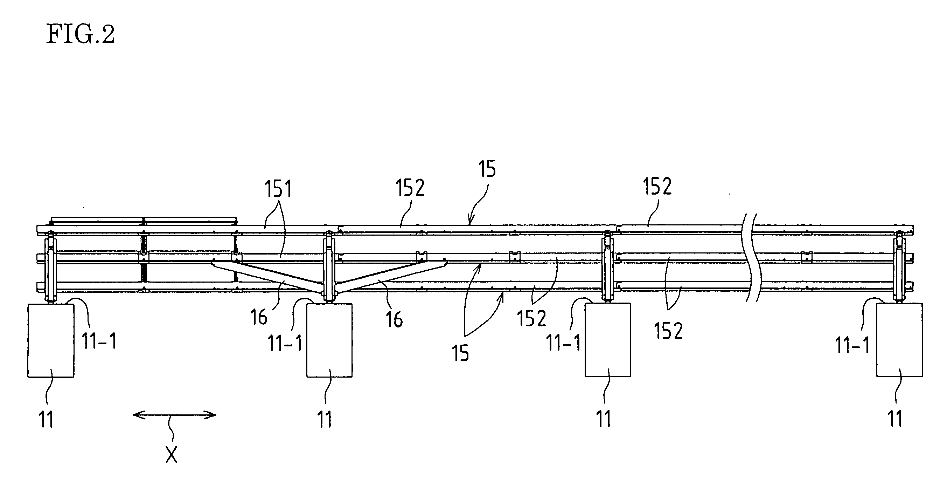

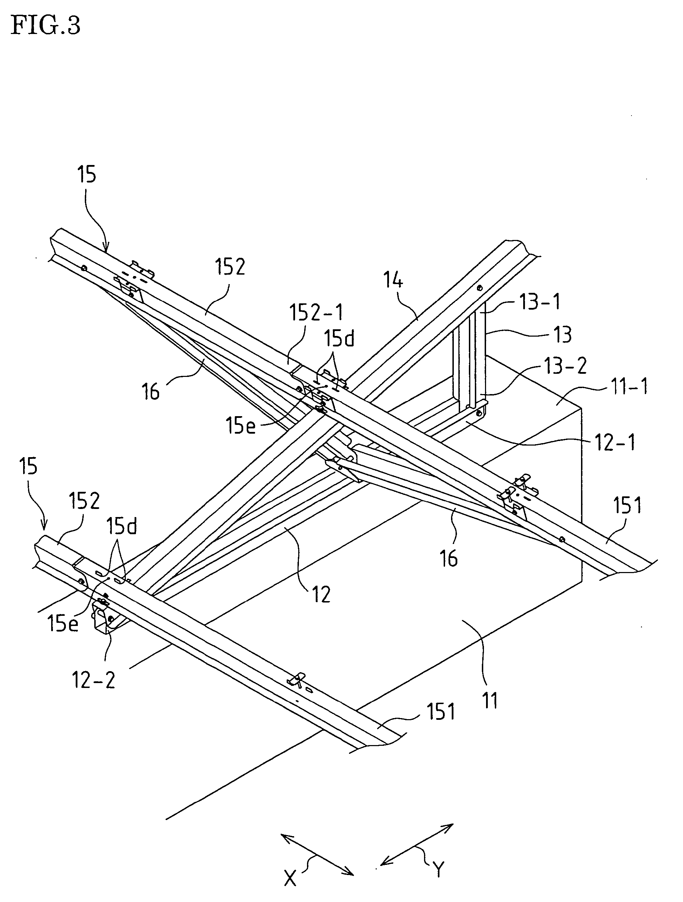

FIG. 1 is a perspective view showing a photovoltaic power generation system to which a solar cell module rack according to an embodiment of the present invention is applied. FIG. 2 is a back view showing the photovoltaic power generation system of FIG. 1. FIG. 3 is a partially enlarged perspective view showing the photovoltaic power generation system of FIG. 1.

The photovoltaic power generation system is assumed to be used to provide a power plant. In the photovoltaic power generation system, a large number of solar cell modules are installed using the solar cell module rack of this embodiment.

As shown in FIGS. 1, 2, and 3, the solar cell module rack of this embodiment includes a plurality of concrete foundations 11 that are equally spaced and arranged on the ground. Base cross-pieces 12 are fixed to respective corresponding upper surfaces 11-1 of the concrete foundations 11, and are equally spaced and arranged side by side. Arms 13 are connected in an upright position to respective corresponding rear end portions 12-1 of the base cross-pieces 12. Vertical cross-pieces 14 are fixed to respective corresponding front end portions 12-2 of the base cross-pieces 12 and respective corresponding upper end portions 13-1 of the arms 13, spanning or extending diagonally therebetween. Three horizontal cross-pieces 15 (151, 152) are provided and arranged side by side on the vertical cross-pieces 14, intersecting the vertical cross-pieces 14 at right angles. Two trusses 16 are provided for each of the even-numbered base cross-pieces 12 as counted from the rightmost base cross-piece 12 (the first base cross-piece 12) in FIG. 1. The trusses 16 span or extend between the base cross-piece 12 and the middle horizontal cross-piece 15. As a result, a truss structure that reinforces the middle horizontal cross-piece 15 is constructed.

Note that, in FIGS. 1, 2, and 3, a direction in which the concrete foundations 11 are arranged side by side is referred to as an X direction (a left-right direction), and a direction perpendicular to the X direction is referred to as a Y direction (a front-back direction).

In the solar cell module rack thus configured, a plurality of solar cell modules 17 are arranged in a line in the lateral direction and mounted on the upper horizontal cross-piece 15 and the middle horizontal cross-piece 15. Also, a plurality of solar cell modules 17 are arranged in a line in the lateral direction and mounted on the lower horizontal cross-piece 15 and the middle horizontal cross-piece 15. Therefore, the two lines of solar cell modules 17 are arranged side by side on the three horizontal cross-pieces 15. Six solar cell modules 17 are provided between any two vertical cross-pieces 14 that are adjacent to each other in the left-right direction. Each solar cell module 17 includes a solar cell panel 18 including a plurality of solar cells arranged in a matrix, and a frame member 19 holding the solar cell panel 18.

Next, the concrete foundation 11, the base cross-piece 12, the arm 13, the vertical cross-piece 14, the horizontal cross-piece 15, the truss 16, etc. included in the solar cell module rack will be described.

Each concrete foundation 11 is produced by forming a formwork on the ground, pouring concrete into the formwork, and hardening the concrete. The concrete foundations 11 are equally spaced and arranged. The upper surfaces 11-1 of the concrete foundations 11 have the same height, i.e., are on the same horizontal plane.

The upper surfaces 11-1 of the concrete foundations 11 are used as a horizontal foundation surface. The base cross-pieces 12 are equally spaced and arranged in parallel on and fixed to the foundation surface. The base cross-pieces 12, the arms 13, the vertical cross-pieces 14, the horizontal cross-pieces 15, the trusses 16, etc. are assembled and connected together into the solar cell module rack.

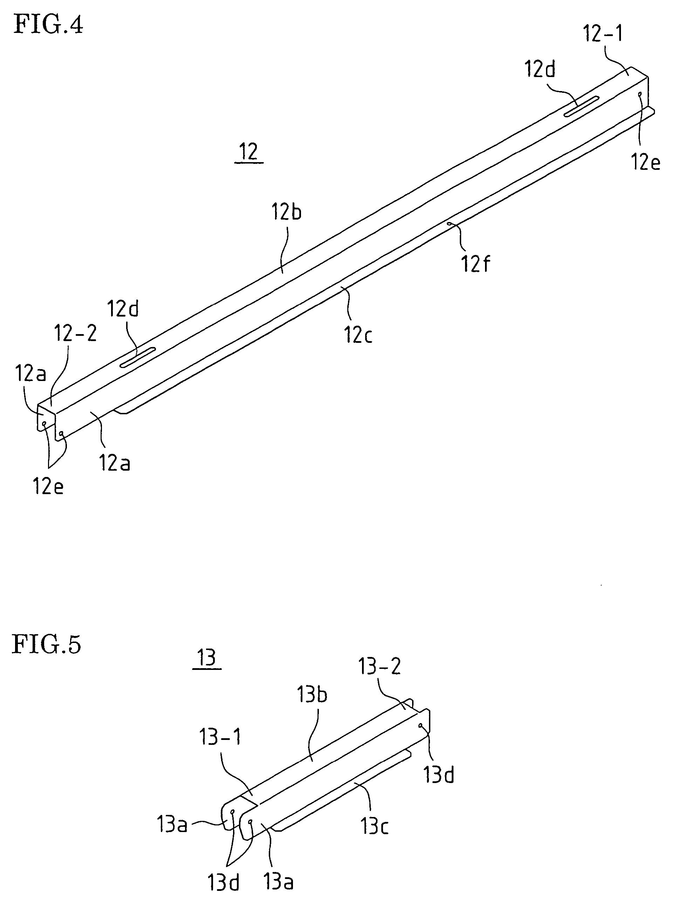

FIG. 4 is a perspective view showing the base cross-piece 12. As shown in FIG. 4, the base cross-piece 12 includes a pair of side plates 12a facing each other, a main plate 12b linking sides facing each other of the side plates 12a, and brims 12c each of which is formed by bending an edge of the corresponding side plate 12a outward, and thus, has a hat-shaped cross-section. Each brim 12c is cut away at the front end portion 12-2 of the base cross-piece 12. The front end portion 12-2 of the base cross-piece 12 has a U-shaped cross-section including the side plates 12a and the main plate 12b.

An elongated hole 12d is formed in the vicinity of each of both ends of the main plate 12b of the base cross-piece 12. A perforated hole 12e is formed at each of both end portions of each side plate 12a. A perforated hole 12f is formed at each of middle portions of the brims 12c.

FIG. 5 is a perspective view showing the arm 13. As shown in FIG. 5, the arm 13 includes a pair of side plates 13a facing each other, a main plate 13b linking sides facing each other of the side plates 13a, and brims 13c each of which is formed by bending an edge of the corresponding side plate 13a outward, and thus, has a hat-shaped cross-section. At a lower end portion 13-2 of the arm 13, the main plate 13b and the brims 13c are cut away, leaving only the side plates 13a. Also, at the upper end portion 13-1 of the arm 13, the main plate 13b and the brims 13c are cut away, leaving only the side plates 13a. Moreover, a perforated hole 13d is formed at each of both end portions of each side plate 13a of the arm 13.

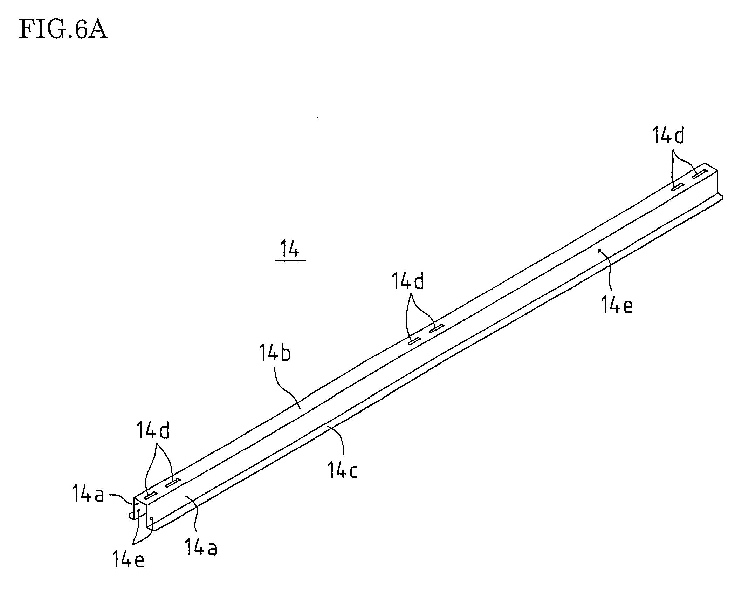

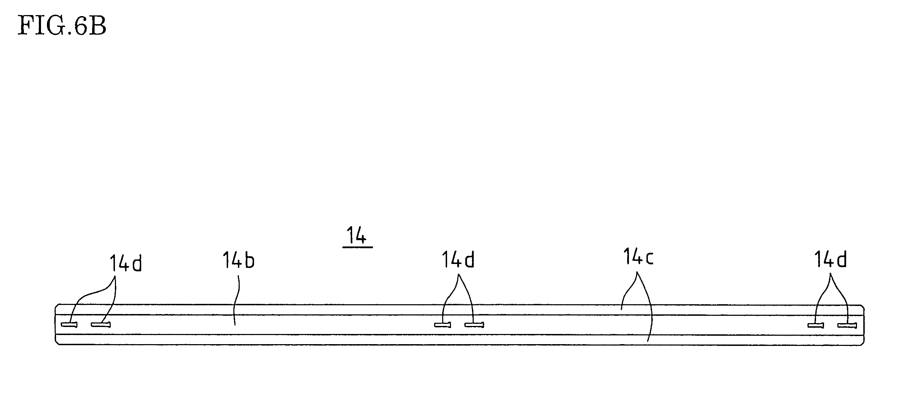

FIGS. 6A and 6B are a perspective view and a plan view, respectively, showing the vertical cross-piece 14. As shown in FIGS. 6A and 6B, the vertical cross-piece 14 includes a pair of side plates 14a facing each other, a main plate 14b linking sides facing each other of the side plates 14a, and brims 14c each of which is formed by bending an edge of the corresponding side plate 14a outward, and thus, has a hat-shaped cross-section.

A pair of T-shaped holes 14d are formed in the vicinity of each of both ends and at a middle of the main plate 14b of the vertical cross-piece 14. A perforated hole 14e is formed at a front end portion of each side plate 14a. A perforated hole 14e is also formed at a portion of each side plate 14a that is closer to a rear end portion than a middle portion of the side plate 14a is.

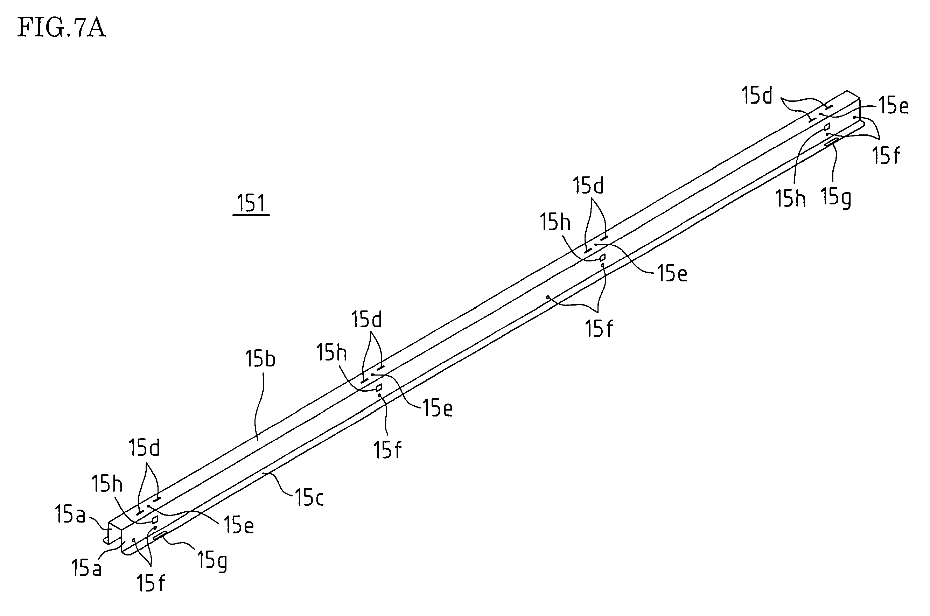

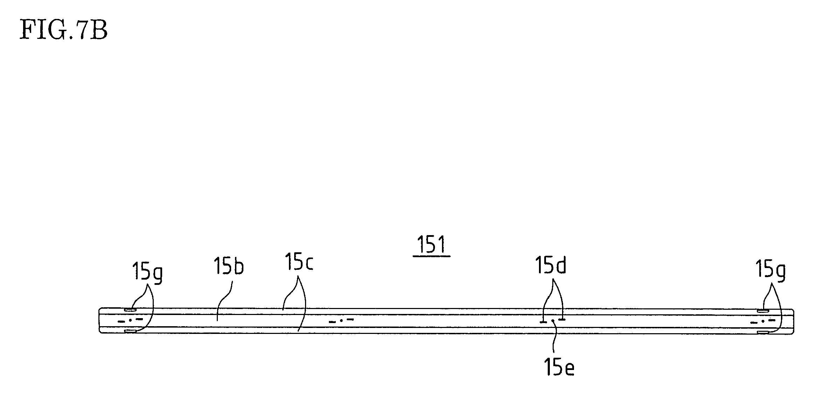

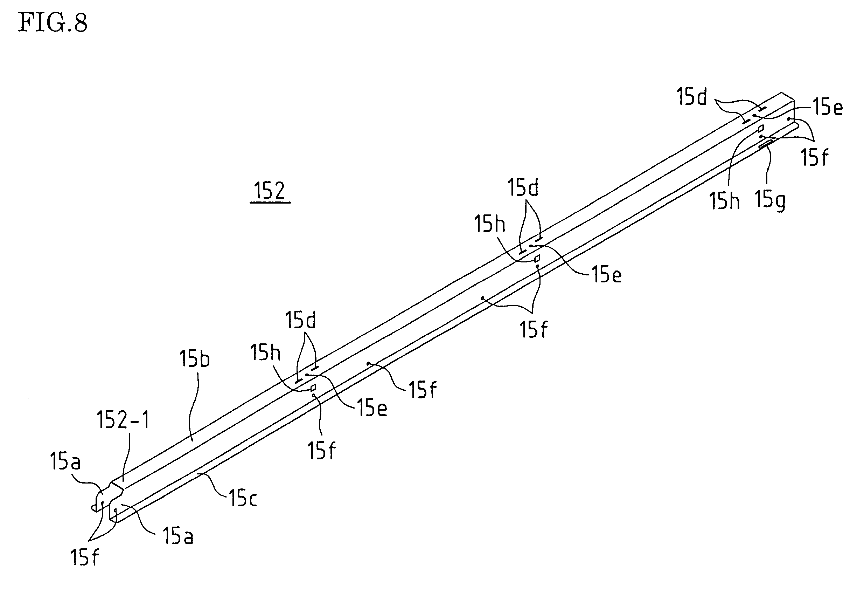

FIGS. 7A, 7B, and 8 show a cross-piece member included in the horizontal cross-piece 15. As shown in FIG. 1, the horizontal cross-piece 15 is considerably long in the X direction, and therefore, it is almost impossible to form the horizontal cross-piece 15 using a single member. Therefore, the horizontal cross-piece 15 is formed by connecting a plurality of cross-piece members together.

FIGS. 7A and 7B are a perspective view and a plan view, respectively, showing the rightmost (first) cross-piece member 151 of the horizontal cross-piece 15 in FIG. 1. As shown in FIGS. 7A and 7B, the first cross-piece member 151 includes a pair of side plates 15a facing each other, a main plate 15b linking sides facing each other of the side plates 15a, and brims 15c each of which is formed by bending an edge of the corresponding side plate 15a outward, and thus, has a hat-shaped cross-section.

A pair of slits 15d and a perforated hole 15e are formed at each of four points of the main plate 15b of the cross-piece member 151. A perforated hole 15f and an engagement hole 15h are formed at each of a plurality of points of each side plate 15a. An elongated hole 15g is formed at each of both end portions of each brim 15c.

The cross-piece member 151 is slightly longer than a space between each vertical cross-piece 14 of FIG. 1. As a result, the cross-piece member 151 can be supported by the adjacent vertical cross-pieces 14, spanning or extending therebetween.

FIG. 8 is a perspective view showing the second cross-piece member 152, or one of the subsequent cross-piece members 152, to the left of the rightmost (first) cross-piece member 151 of FIG. 1. As shown in FIG. 8, similar to the cross-piece member 151 of FIGS. 7A and 7B, the second and subsequent cross-piece members 152 also each include a pair of side plates 15a, a main plate 15b, and brims 15c, and thus, has a hat-shaped cross-section. A pair of slits 15d and a perforated hole 15e are formed at each of three points of the main plate 15b. A perforated hole 15f and an engagement hole 15h are formed at each of a plurality of points of each side plate 15a. An elongated hole 15g is formed at an end portion of each brim 15c.

At one end portion 152-1 of the cross-piece member 152, the main plate 15b and a portion of each side plate 15a along a side thereof are cut away, leaving only the side plates 15a and the brims 15c.

The cross-piece member 152 is substantially as long as the space between each vertical cross-piece 14 of FIG. 1, and is slightly shorter than the cross-piece member 151.

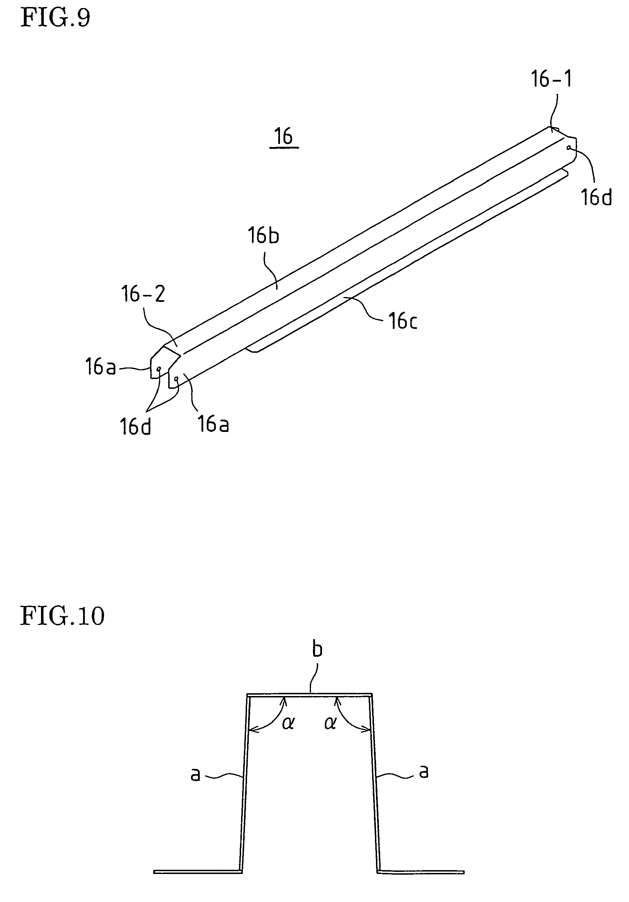

FIG. 9 is a perspective view showing the truss 16. As shown in FIG. 9, the truss 16 includes a pair of side plates 16a facing each other, a main plate 16b linking sides facing each other of the side plates 16a, and brims 16c each of which is formed by bending an edge of the corresponding side plate 16a outward, and thus, has a hat-shaped cross-section.

At one end portion 16-1 of the truss 16, the main plate 16b and the brims 16c are cut away, leaving only the side plates 16a. Also, at the other end portion 16-2 of the truss 16, the main plate 16b and the brims 16c are cut away, leaving only the side plates 16a. A perforated hole 16d is formed at each of both end portions of each side plate 16a of the truss 16.

Here, the base cross-piece 12, the arm 13, the vertical cross-piece 14, the horizontal cross-piece 15, and the truss 16 all include side plates, a main plate linking sides facing each other of the side plates, and brims each of which is formed by bending an edge of the corresponding side plate outward, and thus, has a hat-shaped cross-section. All the hat-shaped cross-sections have the same size. All of them are formed by cutting a plated steel plate having the same thickness, cutting or perforating the plated steel plate, and bending the plated steel plate.

As shown in FIG. 10, the hat-shaped cross-sections of the base cross-piece 12, the arm 13, the vertical cross-piece 14, the horizontal cross-piece 15, and the truss 16 have a shape that a bending angle a of each side plate "a" with respect to the main plate "b" is set so that a space between the side plates "a" becomes gradually wider in a direction away from the main plate "b." In other words, the space between the side plates "a" is wide at the opening of the hat-shaped cross-section of the cross-piece, and is narrower at the main plate "b" than at the opening of the cross-piece. Therefore, this facilitates putting the side plates of a cross-piece end portion on top of another cross-piece end portion as described below.

Next, a triangular structure that is assembled by putting together the base cross-piece 12, the arm 13, and the vertical cross-piece 14 on the concrete foundation 11 will be described.

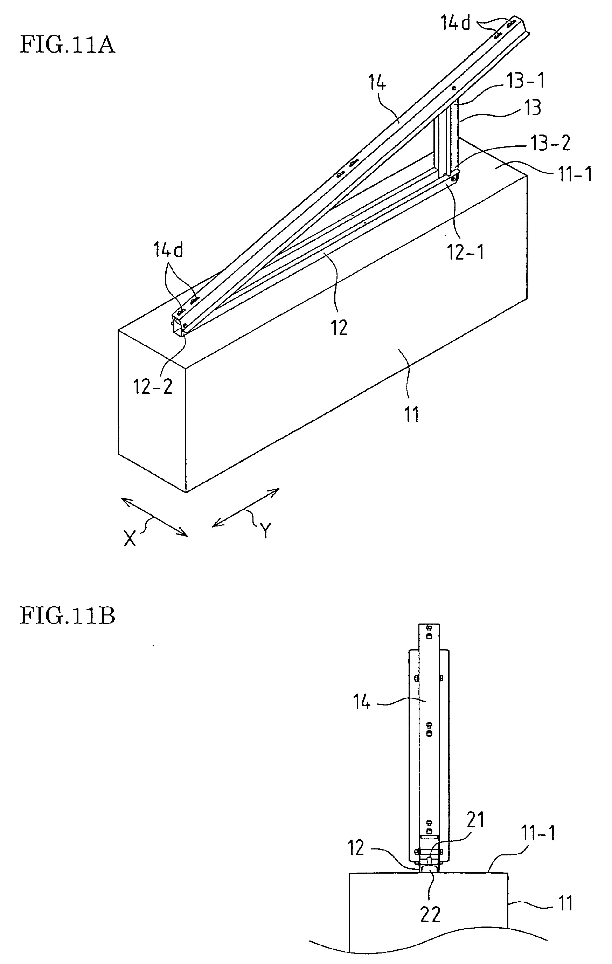

FIGS. 11A and 11B are a perspective view and a front view, respectively, showing the triangular structure formed of the base cross-piece 12, the arm 13, and the vertical cross-piece 14. As shown in FIGS. 11A and 11B, the base cross-piece 12 is fixed to the upper surface 11-1 of the concrete foundation 11. The arm 13 is connected in an upright position to the rear end portion 12-1 of the base cross-piece 12. The vertical cross-piece 14 is fixed to the front end portion 12-2 of the base cross-piece 12 and the upper end portion 13-1 of the arm 13, spanning or extending diagonally therebetween. As a result, the triangular structure formed of the base cross-piece 12, the arm 13, and the vertical cross-piece 14 is constructed.

Two bolts 21 are previously provided, protruding from the upper surface 11-1 of the concrete foundation 11. The bolts 21 are inserted through the respective corresponding elongated holes 12d of the main plate 12b of the base cross-piece 12 so that the base cross-piece 12 is mounted on the concrete foundation 11 with the main plate 12b of the base cross-piece 12 abutting the upper surface 11-1 of the concrete foundation 11. In this case, the base cross-piece 12 can be moved along the elongated holes 12d (the Y direction of FIG. 1), and therefore, the position in the Y direction of the base cross-piece 12 is adjusted by moving the base cross-piece 12 in the Y direction.

The bolts 21 are each inserted through a hole of a corresponding one of two U-shaped reinforcement members 22, which are provided inside the base cross-piece 12. A nut is screwed and fastened to each bolt 21. As a result, the base cross-piece 12 is fixed to the upper surface 11-1 of the concrete foundation 11.

Thereafter, the arm 13 is connected in an upright position to the rear end portion 12-1 of the base cross-piece 12. At the lower end portion 13-2 of the arm 13, the main plate 13b and the brims 13c are cut away, leaving only the side plates 13a. As shown in FIG. 10, the space between the side plates 12a of the base cross-piece 12 becomes gradually wider toward the opening of the hat-shaped cross-section. Therefore, the lower end portions of the side plates 13a can be easily inserted and sandwiched between the rear end portions of the side plates 12a of the base cross-piece 12 while being are elastically deformed to approach each other. Therefore, the lower end portions of the side plates 13a and the rear end portions of the side plates 12a can be put on top of each other. In this case, the arm 13 is in an upright position without a support. This facilitates subsequently connecting the arm 13.

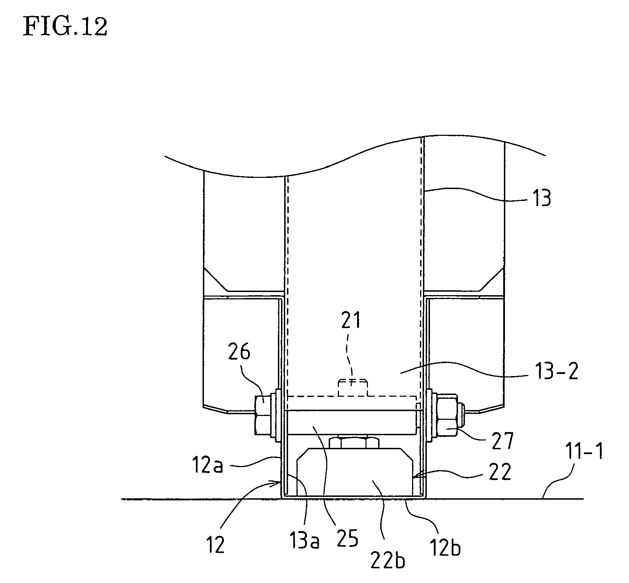

As shown in FIG. 12, while the arm 13 is in an upright position without a support, a pipe 25 is inserted between the side plates 13a of the arm 13. The pipe 25, the perforated holes 13d of the side plates 13a of the arm 13, and the perforated holes 12e of the side plates 12a of the base cross-piece 12 are positioned and aligned. A bolt 26 is inserted through the pipe 25, the perforated holes 13d of the side plates 13a of the arm 13, the perforated holes 12e of the side plates 12a of the base cross-piece 12, and a washer. A nut 27 is screwed and fastened to an end of the bolt 26, whereby the lower end portions of the side plates 13a of the arm 13 are connected to the respective corresponding side plates 12a of the base cross-piece 12.

Next, the vertical cross-piece 14 is fixed to the front end portion 12-2 of the base cross-piece 12 and the upper end portion 13-1 of the arm 13, spanning or extending diagonally therebetween. The brims 12c are cut away at the front end portion of the base cross-piece 12. As shown in FIG. 10, the space between the side plates 14a of the vertical cross-piece 14 becomes gradually wider toward the opening of the hat-shaped cross-section. Therefore, the front end portions of the side plates 12a of the base cross-piece 12 can be easily inserted between the front end portions of the side plates 14a of the vertical cross-piece 14 while being elastically deformed to approach each other. Therefore, the front end portions of the side plates 12a and the front end portions of the side plates 14a can be put on top of each other.

In this state, similar to FIG. 12, a pipe is inserted between the side plates 12a of the base cross-piece 12. The pipe, the perforated holes 12e of the side plates 12a of the base cross-piece 12, and the perforated holes 14e of the side plates 14a of the vertical cross-piece 14 are positioned and aligned. A bolt is inserted through the pipe, the perforated holes 12e of the side plates 12a of the base cross-piece 12, the perforated holes 14e of the side plates 14a of the vertical cross-piece 14, and a washer. A nut is screwed and fastened to an end of the bolt, whereby the front end portions of the side plates 14a of the vertical cross-piece 14 are connected to the respective corresponding side plates 12a of the base cross-piece 12.

Similarly, at the upper end portion 13-1 of the arm 13, the main plate 13b and the brims 13c are cut away, leaving only the side plates 13a. Therefore, the upper end portions of the side plates 13a can be easily inserted between the side plates 14a of the vertical cross-piece 14 while being elastically deformed to approach each other.

In this state, similar to FIG. 12, a pipe is inserted across between the side plates 13a of the arm 13. A bolt is inserted through the pipe, the perforated holes 13d of the side plates 13a of the arm 13, the perforated holes 14e of the side plates 14a of the vertical cross-piece 14, and a washer. A nut is screwed and fastened to an end of the bolt, whereby the upper end portion 13-1 of the arm 13 is connected to the side plates 14a of the vertical cross-piece 14.

Thus, a triangular structure formed of the base cross-piece 12, the arm 13, and the vertical cross-piece 14 is constructed. The triangular structure can sufficiently withstand forces in vertical and horizontal directions without significantly increasing the number of parts.

Next, a structure for connecting and fixing the cross-piece member 151, 152 included in the horizontal cross-piece 15 to the vertical cross-piece 14 will be described.

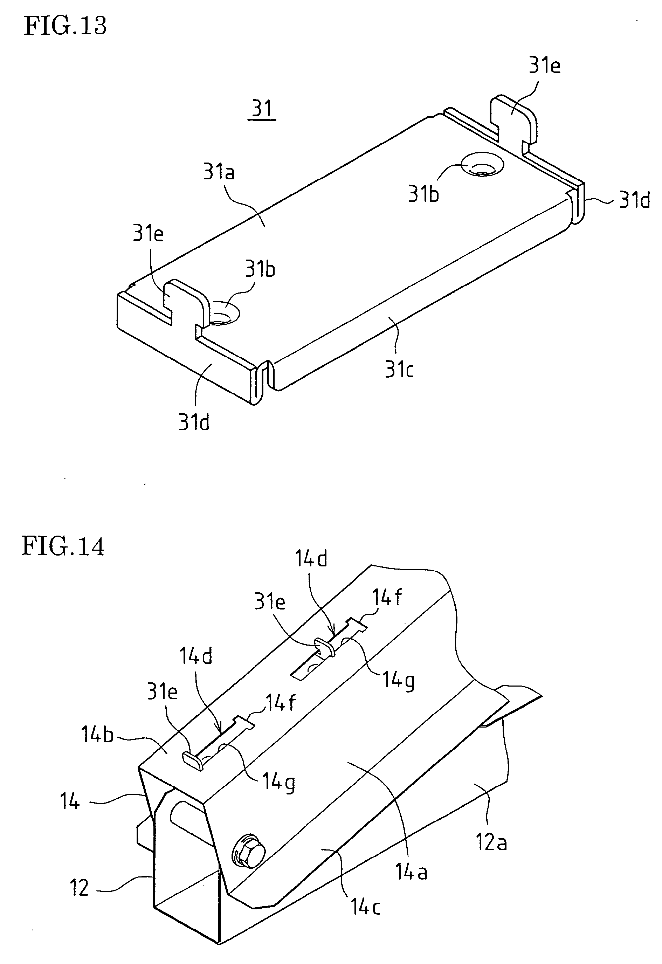

FIG. 13 is a perspective view showing an attachment member 31 for connecting and fixing the cross-piece member 151, 152 of the horizontal cross-piece 15 to the vertical cross-piece 14. The attachment member 31 includes a bottom plate 31a having two screw holes 31b. The attachment member 31 includes a side plate 31c on each of left and right sides of the bottom plate 31a. The attachment member 31 also includes a side plate 31d on each of the front and rear sides of the bottom plate 31a. The side plates 31d are each folded into two portions. The attachment member 31 also includes T-shaped support strips 31e each of which protrudes from a middle of the corresponding side plate 31d.

As shown in FIGS. 6A, 6B, 11A, and 11B, a pair of T-shaped holes 14d are formed in the vicinity of both ends and at a middle of the main plate 14b of the vertical cross-piece 14. At each pair of T-shaped holes 14d, the attachment member 31 is attached to the main plate 14b of the vertical cross-piece 14. The attachment member 31 is provided at each of the three points, i.e., at the middle and in the vicinity of both ends of the main plate 14b of the vertical cross-piece 14.

As shown in FIG. 14, a head portion of each support strip 31e of the attachment member 31 is inserted into a slit 14f of the corresponding T-shaped hole 14d. Each support strip 31e is moved to an engagement hole 14g of the corresponding T-shaped hole 14d, and the head portion of each support strip 31e is hooked to the engagement hole 14g of the corresponding T-shaped hole 14d. As a result, the attachment member 31 is attached to the main plate 14b of the vertical cross-piece 14.

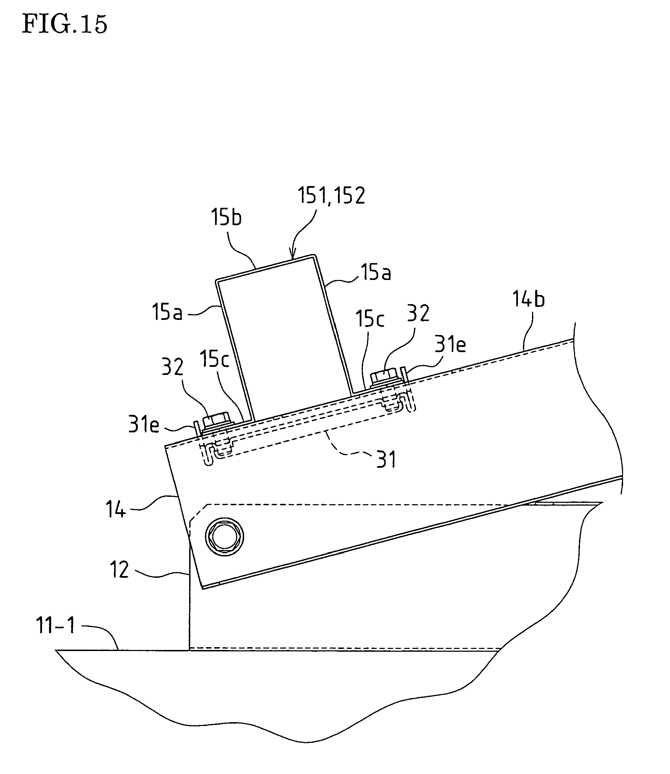

As shown in FIGS. 1 and 15, the cross-piece member 151, 152 is put on the main plate 14b of the vertical cross-piece 14, intersecting the vertical cross-piece 14 at right angles. The brims 15c of the cross-piece member 151, 152 are arranged between the head portions of the support strip 31e of the attachment member 31. Thereafter, the elongated holes 15g of the brims 15c of the cross-piece member 151, 152 are positioned directly above the respective corresponding screw holes 31b of the attachment member 31 with the respective corresponding T-shaped holes 14d of the main plate 14b of the vertical cross-piece 14 being interposed between the elongated holes 15g and the respective corresponding screw holes 31b. Bolts 32 are screwed and loosely fastened through the respective corresponding elongated holes 15g of the brims 15c of the cross-piece member 151, 152 and the respective corresponding T-shaped holes 14d of the main plate 14b of the vertical cross-piece 14 into the respective corresponding screw holes 31b of the attachment member 31.

In the loosely fastened state, the bolts 32 can be moved along the respective corresponding elongated holes 15g of the brims 15c of the cross-piece member 151, 152. Therefore, the cross-piece member 151, 152 is moved along the elongated holes 15g (in the X direction of FIG. 1) so that a position in the X direction of the cross-piece member 151, 152 is adjusted.

The attachment member 31 can also be moved along the T-shaped holes 14d of the main plate 14b of the vertical cross-piece 14 (in a longitudinal direction of the vertical cross-piece 14). The cross-piece member 151, 152 can also be moved along with the attachment member 31. By the movement of the cross-piece member 151, 152 in the longitudinal direction of the vertical cross-piece 14, the spaces between the three horizontal cross-pieces 15 provided on the vertical cross-piece 14 are adjusted.

After positions in the X direction of the three horizontal cross-pieces 15 are adjusted and the spaces between the horizontal cross-pieces 15 are adjusted, the bolts 32 of the attachment members 31 are fastened on fix the horizontal cross-pieces 15 to the vertical cross-pieces 14.

Next, a connection structure of a plurality of the cross-piece members 151, 152 included in the horizontal cross-piece 15 will be described.

The cross-piece member 151 of FIGS. 7A and 7B is the rightmost (first) cross-piece member of the horizontal cross-piece 15 of FIG. 1. The cross-piece member 151 is supported by the vertical cross-pieces 14 provided on the first and second concrete foundations 11 of FIG. 1, spanning or extending therebetween. The cross-piece member 151 is fixed to the vertical cross-pieces 14 using the attachment members 31.

The cross-piece member 152 of FIG. 8 is the second cross-piece member, or one of the subsequent cross-piece members 152, of the horizontal cross-piece 15 of FIG. 1. The cross-piece member 152 is supported by the left end portion of the immediately preceding cross-piece member and the succeeding vertical cross-piece 14, spanning or extending therebetween. For example, the second cross-piece member 152 is supported by the left end portion of the first cross-piece member 151 and the third vertical cross-piece 14, spanning or extending therebetween. The third cross-piece member 152 is supported by the left end portion of the second cross-piece member 152 and the fourth vertical cross-piece 14, spanning or extending therebetween. Similarly, the n-th cross-piece member 152 is supported by the left end portion of the (n - 1)th cross-piece member 152 and the (n + 1)th vertical cross-piece 14, spanning or extending therebetween. The second and subsequent cross-piece members 152 are also connected to the respective corresponding vertical cross-pieces 14 using the attachment members 31.

As shown in FIGS. 7A and 7B, the main plate 15b is not cut away at either of both ends of the first cross-piece member 151. As shown in FIG. 8, at the one end portions 152-1 of the second and subsequent cross-piece members 152, portions along a side of the main plate 15b and the side plates 15a are cut away, leaving only the side plates 15a and the brims 15c. Thereafter, as shown in FIGS. 1 and 3, the one end portion 152-1 of each of the second and subsequent cross-piece members 152 is connected to the left end portion of the immediately preceding cross-piece member.

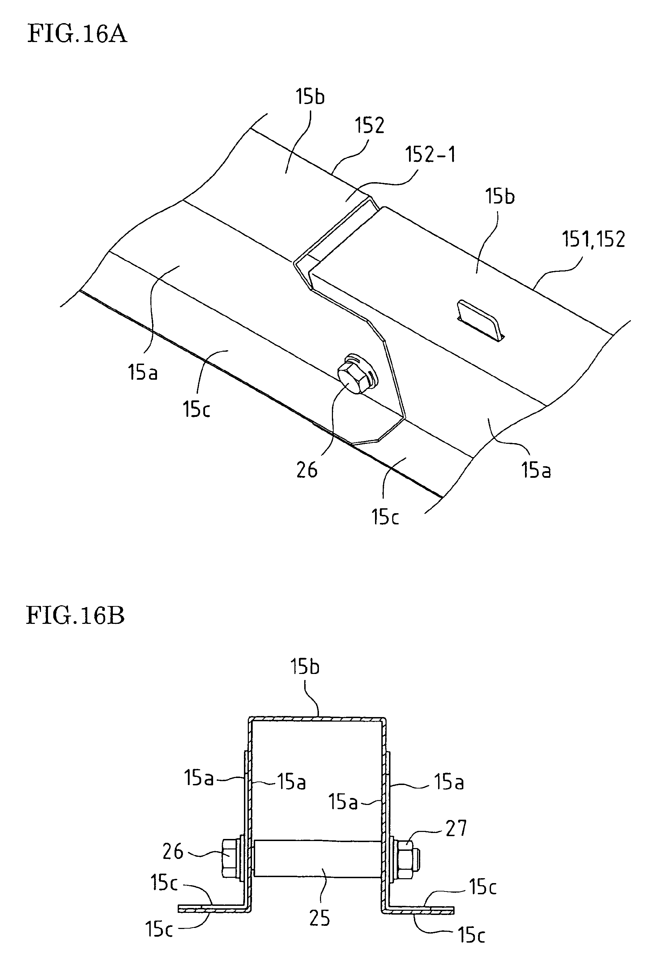

For example, as shown in FIG. 16A, the left end portions of the side plates 15a of the first cross-piece member 151 are inserted and sandwiched between the one end portions of the side plates 15a of the second cross-piece member 152. As shown in FIG. 10, the space between the side plates 15a becomes gradually wider toward the opening of the hat-shaped cross-section of the horizontal cross-piece 15 (the cross-piece member 151, 152). Therefore, only by putting the one end portions of the side plates 15a of the second cross-piece member 152 on top of the left end portions of the side plates 15a of the first cross-piece member 151, the left end portion of the first side plate 15a is inserted and sandwiched between the one end portions of the side plates 15a of the second cross-piece member 152.

In this state, as shown in FIG. 16B, a pipe 25 is inserted across between the side plates 15a of the first cross-piece member 151. A bolt 26 is inserted through the pipe 25, the perforated holes 15f of the side plates 15a of the first cross-piece member 151, the perforated holes 15f of the side plates 15a of the second cross-piece member 152, and a washer. A nut 27 is screwed and fastened to an end of the bolt 26, whereby the side plates 15a of the second cross-piece member 152 are connected to the respective corresponding side plates 15a of the first cross-piece member 151.

The one end portions of the side plates 15a of the third cross-piece member 152 are put on top of the left end portions of the side plates 15a of the second cross-piece member 152, so that the left end portions of the side plates 15a of the second cross-piece member 152 are inserted and sandwiched between the one end portions of the side plates 15a of the third cross-piece member 152. Thereafter, the side plates 15a of the third cross-piece member 152 are connected to the side plates 15a of the second cross-piece member 152 using a pipe 25, a bolt 26, a nut 27, and a washer.

Similarly, the left end portions of the side plates 15a of the (n - 1)th cross-piece member 152 are inserted and sandwiched between the one end portions of the side plate 15a of the n-th cross-piece member 152. The side plates 15a of the n-th cross-piece member 152 are connected to the side plates 15a of the (n - 1)th cross-piece member 152 using a pipe 25, a bolt 26, a nut 27, and a washer.

Thus, the single long horizontal cross-piece 15 is formed by connecting the cross-piece members 151 and 152 together.

Next, a truss structure for reinforcing the middle horizontal cross-piece 15 will be described.

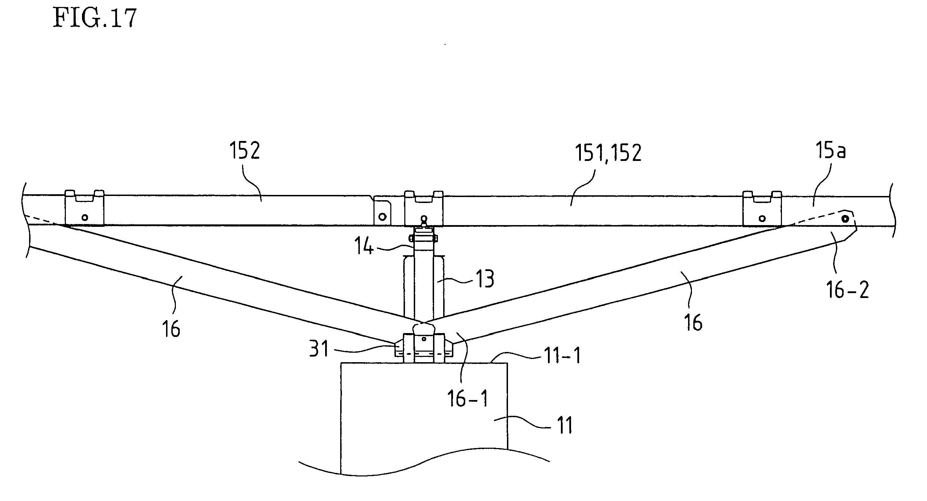

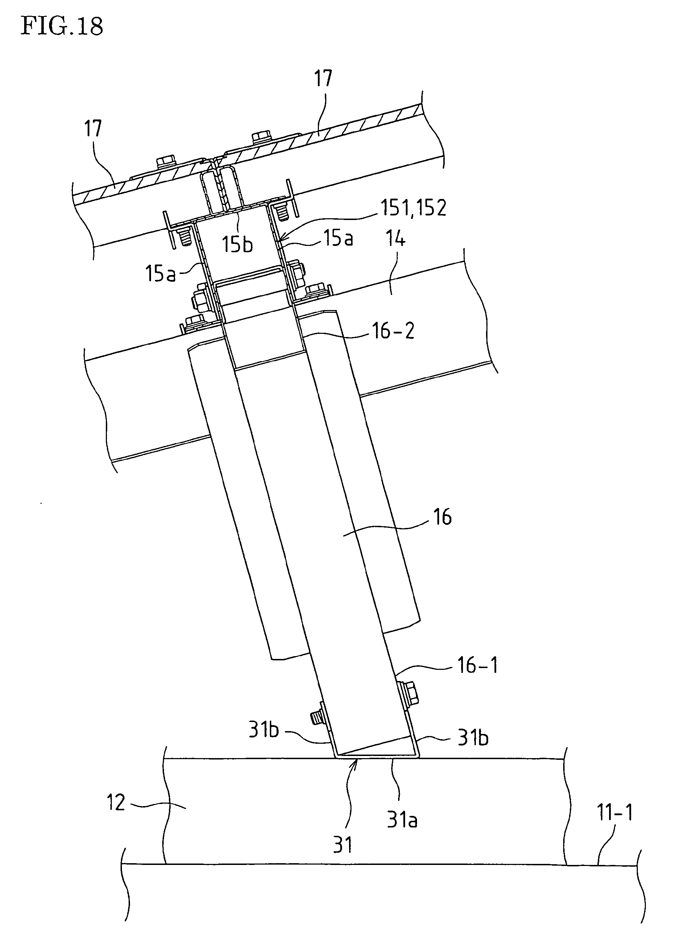

FIGS. 17 and 18 are a front view and a side view, respectively, showing the trusses 16 spanning or extending between the base cross-piece 12 and the middle horizontal cross-piece 15. As can be seen from FIG. 18, as viewed laterally, the trusses 16 are arranged perpendicular to the solar cell module 17. In order to arrange the trusses 16 perpendicular to the solar cell module 17, it is necessary to support the trusses 16 diagonally with respect to the base cross-piece 12. Therefore, side plates 31b of a connection member 31 for connecting the base cross-piece 12 and the two trusses 16 together are inclined.

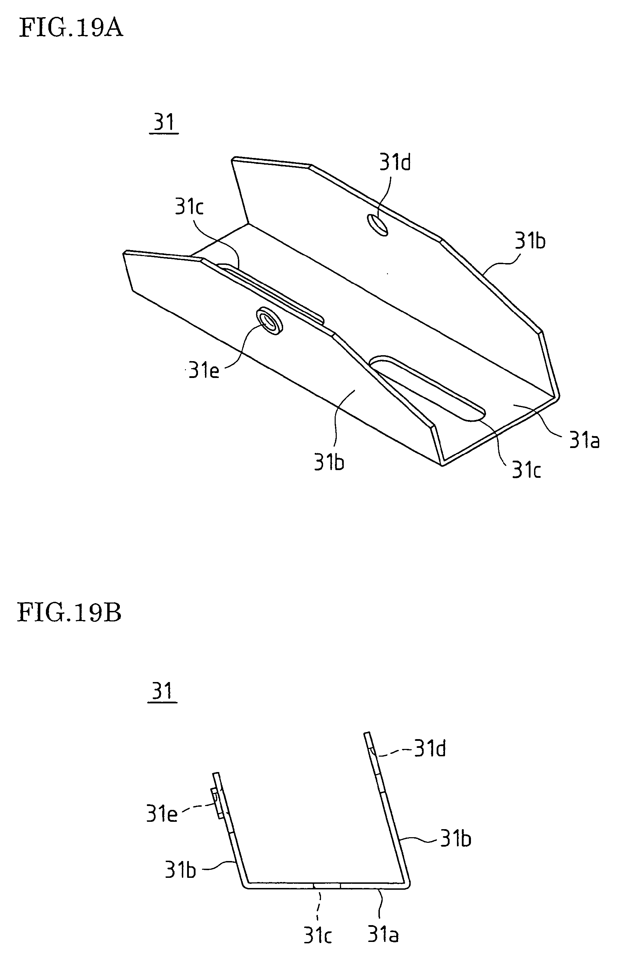

FIGS. 19A and 19B are a perspective view and a side view, respectively, showing the connection member 31 for connecting the base cross-piece 12 and the two trusses 16 together. The connection member 31 includes a bottom plate 31a, and side plates 31b that are bent at both edges of the bottom plate 31a. The side plates 31b are inclined with respect to the bottom plate 31a. Two elongated holes 31c are formed in the bottom plate 31a. A perforated hole 31d and a screw hole 31e are formed in the respective corresponding side plates 31b.

The bottom plate 31a of the connection member 31 is placed at substantially a middle of the brims 12c of the even-numbered base cross-piece 12 with the two elongated holes 31c of the bottom plate 31a coinciding with the respective corresponding perforated holes 12f of the brims 12c. Two bolts are inserted through the respective corresponding elongated holes 31c of the bottom plate 31a and the respective corresponding perforated holes 12f of the brims 12c. Nuts are screwed onto one ends of the respective corresponding bolts, whereby the connection member 31 is loosely fastened to the brims 12c of the base cross-piece 12.

In the loosely fastened state, the bolts are inserted through the respective corresponding elongated holes 31c of the bottom plate 31a of the connection member 31. Therefore, the connection member 31 can be moved along the elongated holes 31c (in the X direction of FIG. 1).

After the connection member 31 is loosely fastened, both end portions of the two trusses 16 are connected to the connection member 31 and the middle horizontal cross-piece 15. In this case, the end portions (the one end portions 16-1 of FIG. 9) of the side plates 16a of the two trusses 16 are alternately put on top of each other. A pipe is inserted between the innermost side plates facing each other. A bolt is inserted through the pipe, the perforated holes 16d of the side plates 16a of the two trusses 16, the perforated hole 31d of the side plate 31b of the connection member 31, and a washer. An end of the bolt is screwed into the screw hole 31e of the side plate 31b of the connection member 31, whereby the end portions of the two trusses 16 are loosely fastened to the connection member 31.

For both of the two trusses 16, the end portions (the other end portions 16-2 of FIG. 9) of the side plates 16a of the truss 16 are inserted between the side plates 15a of the cross-piece member 151 or 152 of the middle horizontal cross-piece 15 while being elastically deformed to approach each other. Thereafter, a pipe is inserted between the side plates 16a of the truss 16. A bolt is inserted through the pipe, the perforated holes 16d of the side plates 16a of the truss 16, the perforated holes 15f of the side plates 15a of the cross-piece member 151 or 152, and a washer. A nut is screwed onto an end of the bolt, whereby the end portions of each truss 16 are loosely fastened to the cross-piece member 151 or 152.

When each truss 16 is thus attached, positions of the end portions (the other end portions 16-2 of FIG. 9) of the side plates 16a of the truss 16 are adjusted while the connection member 31 is moved along the elongated holes 31c (in the X direction of FIG. 1) so that the perforated holes 16d of the end portions of the side plates 16a coincide with the respective corresponding perforated holes 15f of the side plates 15a of the cross-piece member 151 or 152.

After both end portions of each truss 16 are thus connected to the connection member 31 and the middle horizontal cross-piece 15, the bolts for connecting both end portions of the truss 16 are further fastened to fix the truss 16.

Next, a structure for attaching the solar cell module 17 on the horizontal cross-piece 15 will be described.

Here, as can be seen from FIG. 1, the middle horizontal cross-piece 15 supports end portions of the upper and lower solar cell modules 17. The upper and lower horizontal cross-pieces 15 support end portions of the upper and lower solar cell modules 17, respectively. Therefore, the structure for attaching the solar cell module 17 differs between the middle horizontal cross-piece 15 and the upper and lower horizontal cross-pieces 15. These different attachment structures will be separately described.

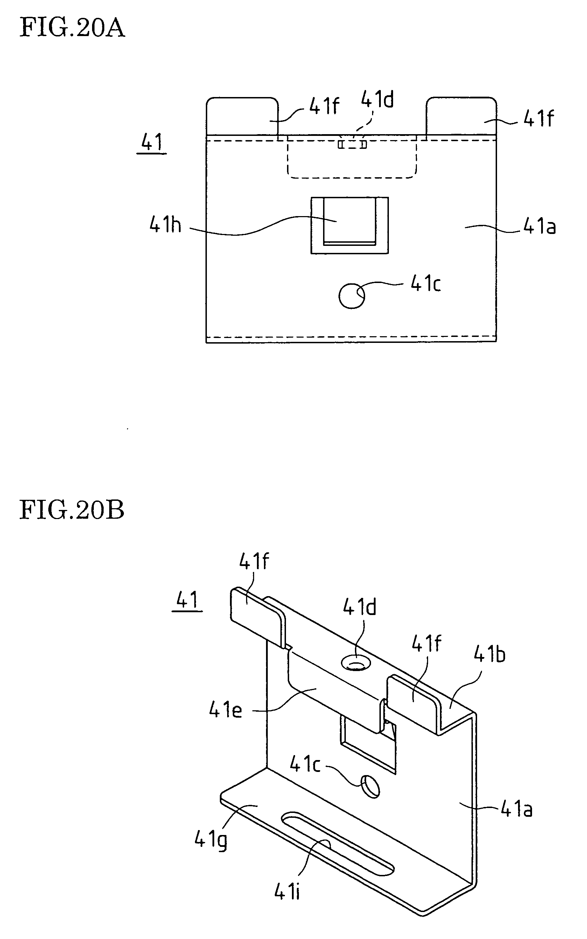

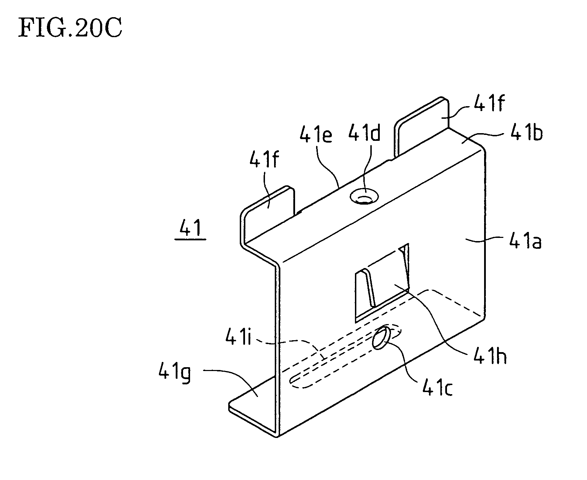

FIGS. 20A, 20B, and 20C are a front view showing a first connection member provided on the middle horizontal cross-piece 15 on the rear side of the solar cell module 17, and perspective views of the first connection member as viewed from the front and the rear, respectively. The first connection member 41 includes a side plate 41a, a top plate 41b that is formed by bending an upper edge of the side plate 41a, and a bottom plate 41g that is formed by bending a lower edge of the side plate 41a. The top plate 41b includes a hanging strip 41e that is formed by bending a center portion of a side of the top plate 41b, hanging from the remainder of the top plate 41b, and protrusion strips 41f that are formed by bending both end portions of the side of the top plate 41b into an upright position. A screw hole 41d is formed at substantially a middle of the top plate 41b. A perforated hole 41c is formed in the side plate 41a. An elongated hole 41i is formed in the bottom plate 41g.

A U-shaped cut is formed in the side plate 41a of the first connection member 41 above the perforated hole 41c. A portion inside the U-shape cut is pushed from the side plate 41a in a direction opposite to the bottom plate 41g and the top plate 41b, to form a nail portion 41h.

The height from the lower surface of the bottom plate 41g of the first connection member 41 to the upper surface of the top plate 41b is slightly higher than the height from the upper surface of the brim 15c of the middle horizontal cross-piece 15 to the upper surface of the main plate 15b.

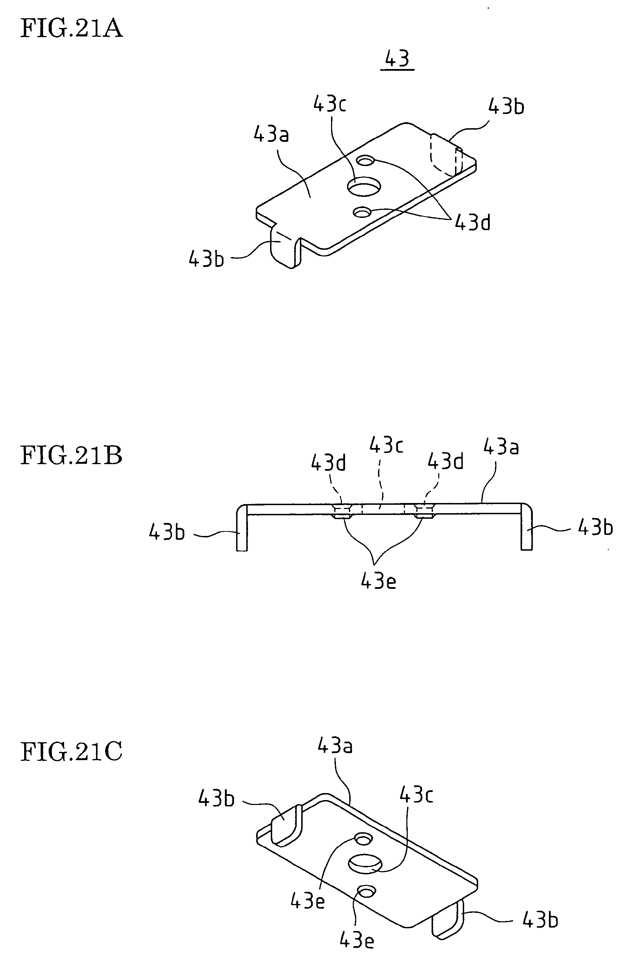

FIGS. 21A-21C are a perspective view showing a first fixing member provided on a light reception side of the solar cell module 17 as viewed from the top, a side view thereof, and a perspective view thereof as viewed from below, respectively.

The first fixing member 43 includes an abutment plate (abutment portion) 43a that abuts the frame member 19 of the solar cell module 17. The first fixing member 43 also includes protrusion strips 43b that are formed by bending a front and a rear end portion of the abutment plate 43a downward. The first fixing member 43 also includes a through hole 43c formed at a middle portion of the abutment plate 43a.

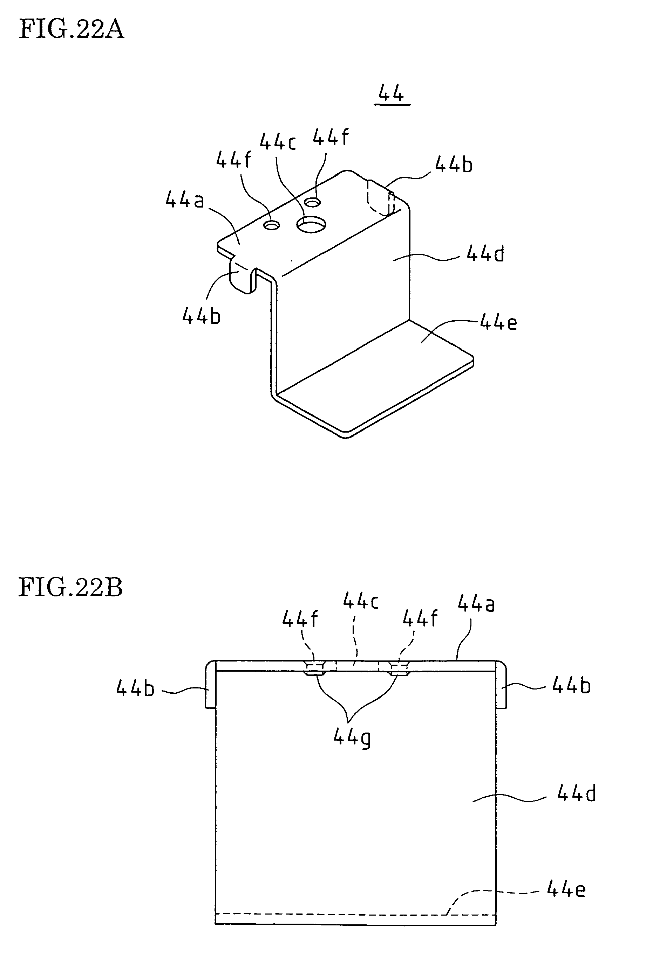

FIGS. 22A and 22B are a perspective view showing a second fixing member provided on a light reception side of the solar cell module 17 as viewed from the top, and a side view thereof.

The second fixing member 44 includes an abutment plate (abutment portion) 44a that abuts the frame member 19 of the solar cell module 17. The second fixing member 44 also includes protrusion strips 44b that are formed by bending a front and a rear end portion of the abutment plate 44a downward. The second fixing member 44 also includes a through hole 44c formed at a middle portion of the abutment plate 44a. The second fixing member 44 also includes an upright wall 44d that is formed by bending an edge of the abutment plate 44a perpendicularly. The second fixing member 44 also includes a bottom strip 44e that is formed by bending a lower edge of the upright wall 44d.

The first connection member 41, the first fixing member 43, and the second fixing member 44 are all formed of a steel plate much thicker than those of the base cross-piece 12, the arm 13, the vertical cross-piece 14, the horizontal cross-piece 15, and the truss 16, and therefore, have high strength.

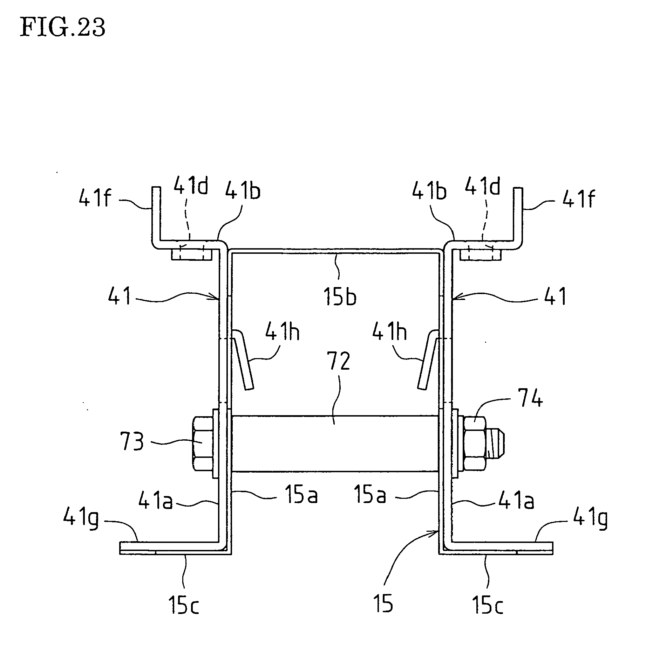

Here, a set of two first connection members 41 is provided at each of portions where pairs of the slits 15d are formed, of the main plate 15b of the cross-piece member 151, 152 of the middle horizontal cross-piece 15. In this case, as shown in FIG. 23, the side plates 41a of the two first connection members 41 are put on top of the respective corresponding side plates 15a of the horizontal cross-piece 15. The top plate 41b and the bottom plate 41g of each first connection member 41 are arranged to protrude outward from the horizontal cross-piece 15. Because the height from the lower surface of the bottom plate 41g of the first connection member 41 to the upper surface of the top plate 41b is set as described above, the upper surface of the top plate 41b of the first connection member 41 is slightly higher than the upper surface of the main plate 15b of the horizontal cross-piece 15. The nail portion 41h of the side plate 41a of each first connection member 41 is engaged with the engagement hole 15h of the corresponding side plate 15a of the horizontal cross-piece 15, whereby the first connection member 41 is loosely fastened to the side plate 15a of the horizontal cross-piece 15.

In this state, as shown in FIG. 23, a pipe 72 is inserted between the side plates 15a of the horizontal cross-piece 15. A bolt 73 is inserted through the pipe 72, the perforated holes 15f of the side plates 15a of the horizontal cross-piece 15, the perforated holes 41c of the side plates 41a of the first connection members 41, and a washer. A nut 74 is screwed and fastened to an end of the bolt 73, whereby the first connection members 41 are fixed to the horizontal cross-piece 15.

Note that, in the rightmost (first) cross-piece member 151 of the middle horizontal cross-piece 15 of FIG. 1, as shown in FIGS. 7A and 7B a pair of slits 15d and a perforated hole 15e are formed at each of four points. Therefore, two first connection members 41 are provided at each of the four points. In the second and subsequent cross-piece members 152 of the horizontal cross-piece 15, as shown in FIG. 8 a pair of slits 15d and a perforated hole 15e are formed at each of three points. Therefore, two first connection members 41 are provided at each of the three points.

At both end portions of the cross-piece member 151 of FIGS. 7A and 7B, the elongated holes 41i of the bottom plates 41g of the first connection members 41 coincide with the respective corresponding elongated holes 15g of the brims 15c of the cross-piece member 151. Also at the one end portion of the cross-piece member 152 of FIG. 8, the elongated holes 41i of the bottom plates 41g of the first connection members 41 coincide with the respective corresponding elongated holes 15g of the brims 15c of the cross-piece member 152. Therefore, the elongated holes 15g of the brims 15c of each of the cross-piece members 151, 152 are not covered by the bottom plates 41g of the first connection member 41, and the length of the elongated holes 15g are not limited, and therefore, each of the cross-piece members 151, 152 is not prevented from moving along the elongated holes 15g.

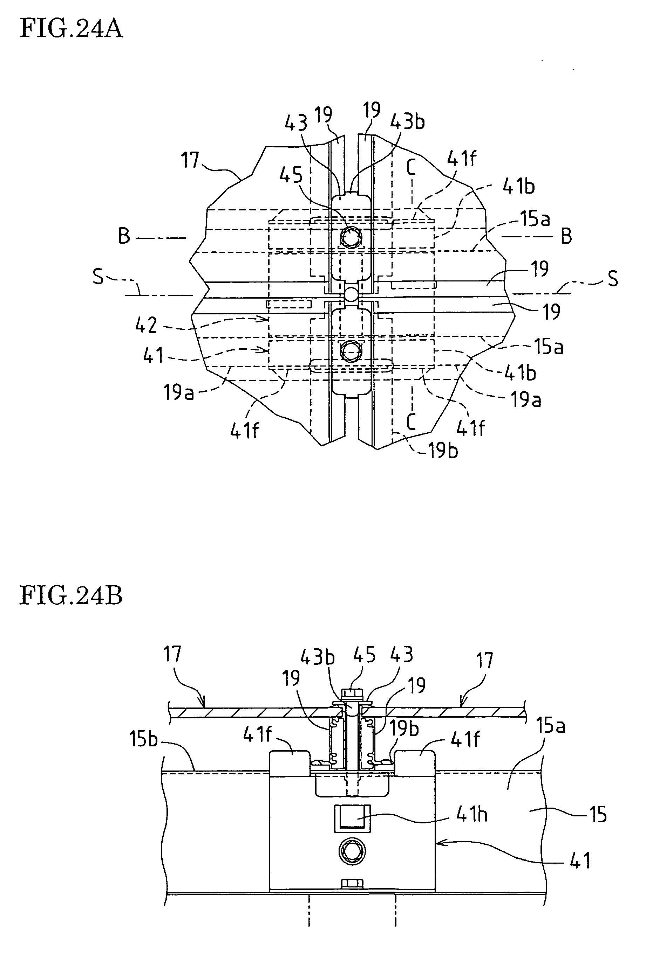

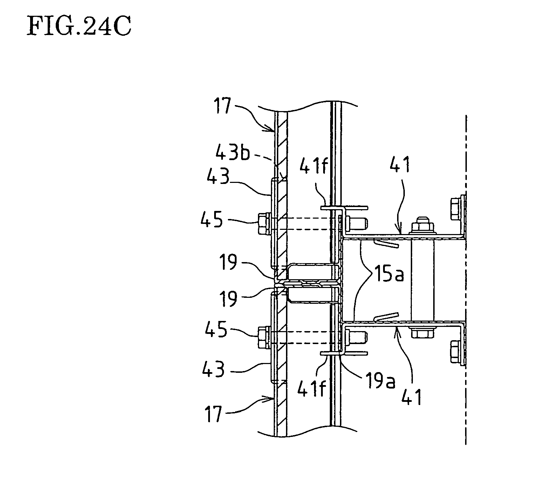

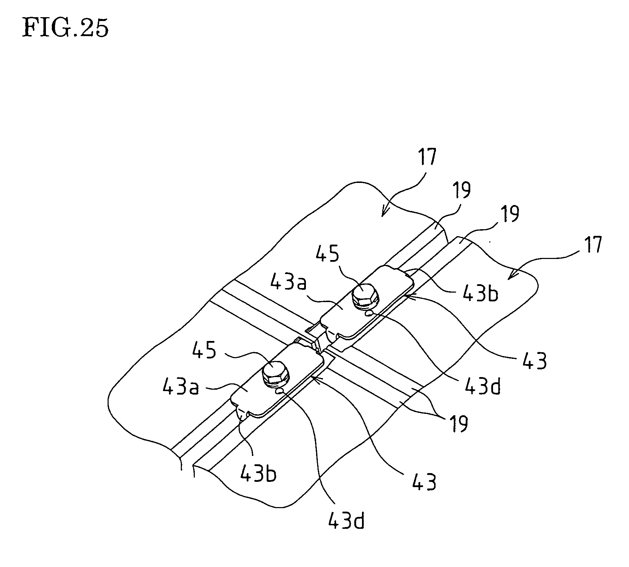

FIG. 24A is a plan view showing a state in which four (upper, lower, left, and right) solar cell modules 17 are attached to the middle horizontal cross-piece 15 using the first connection members 41 and the first fixing members 43. FIG. 24B is a cross-sectional view taken along line B-B of FIG. 24A. FIG. 24C is a cross-sectional view taken along line C-C of FIG. 24A. FIG. 25 is a perspective view showing the state of FIGS. 24A-24C as viewed from the light reception side of the solar cell module.

As shown in FIGS. 24A-24C, the frame members 19 of the lower left and right solar cell modules 17 are inserted between the protrusion strips 41f of the lower first connection member 41 and thus mounted on the main plate 15b of the horizontal cross-piece 15. In this case, the solar cell modules 17 are slid down on the main plate 15b of the horizontal cross-piece 15 until inner edges 19a of the frame members 19 of the lower left and right solar cell modules 17 abut the protrusion strips 41f of the lower first connection member 41, whereby the up-down positions of the solar cell modules 17 are determined.

Thereafter, as shown in FIGS. 24A, 24B, and 25, the protrusion strips 43b of the first fixing member 43 are inserted between the frame members 19 of the lower left and right solar cell modules 17, whereby the frame members 19 of the solar cell modules 17 are spaced apart by a predetermined distance. At the same time, as shown in FIG. 24B, bottom protrusion portions 19b of the frame members 19 of the solar cell modules 17 abut the protrusion strips 41f of the first connection member 41. As a result, the left-right positions of the solar cell modules 17 are determined.

Thereafter, a bolt 45 is screwed and fastened to the screw hole 41d of the top plate 41b of the first connection member 41 through the through hole 43c of the first fixing member 43 and a gap between the frame members 19 of the lower left and right solar cell modules 17. As a result, the frame members 19 of the lower left and right solar cell modules 17 are sandwiched and fixed between the first fixing member 43 and the main plate 15b of the horizontal cross-piece 15.

Similarly, the frame members 19 of the upper left and right solar cell modules 17 are inserted between the protrusion strips 41f of the upper first connection member 41 and thus mounted on the main plate 15b of the horizontal cross-piece 15. In this case, the up-down positions of the upper left and right solar cell modules 17 are determined by causing the frame members 19 of the upper left and right solar cell modules 17 to abut the frame members 19 of the lower left and right solar cell modules 17. Thereafter, the protrusion strips 43b of the first fixing member 43 are inserted between the frame members 19 of the upper left and right solar cell modules 17. The bottom protrusion portions 19b of the frame members 19 of the solar cell modules 17 abut the protrusion strips 41f of the first connection member 41. As a result, the left-right positions of the solar cell modules 17 are determined.

Thereafter, a bolt 45 is screwed and fastened to the screw hole 41d of the top plate 41b of the first connection member 41 through the through hole 43c of the first fixing member 43 and a gap between the frame members 19 of the upper left and right solar cell modules 17. As a result, the frame members 19 of the upper left and right solar cell modules 17 are fixed.

On the other hand, the second fixing members 44 are used to fix two (upper and lower) rightmost or leftmost solar cell modules 17 of FIG. 1.

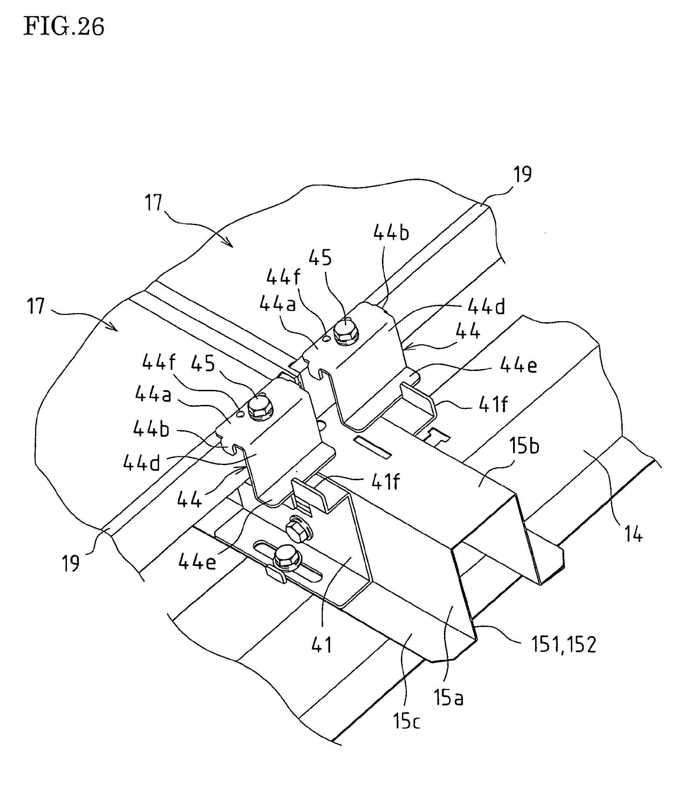

As shown in FIG. 26, the rightmost or leftmost solar cell modules 17 are mounted on the main plate 15b of the horizontal cross-piece 15 with the frame members 19 thereof being inserted between the protrusion strips 41f of the first connection members 41. Thereafter, the bottom strips 44e of the second fixing members 44 are put on the main plate 15b of the horizontal cross-piece 15. The protrusion strips 44b of the second fixing members 44 are pressed against the frame members 19 of the solar cell modules 17. The bottom protrusion portions 19b of the frame members 19 of the solar cell modules 17 abut the protrusion strips 41f of the first connection members 41. As a result, the left-right positions of the solar cell modules 17 are determined.

Thereafter, bolts 45 are screwed and fastened to the respective corresponding screw holes 41d of the top plates 41b of the first connection members 41 through the respective corresponding through holes 44c of the second fixing members 44. As a result, the frame members 19 of the solar cell modules 17 are sandwiched and fixed between the second fixing members 44 and the main plate 15b of the horizontal cross-piece 15.

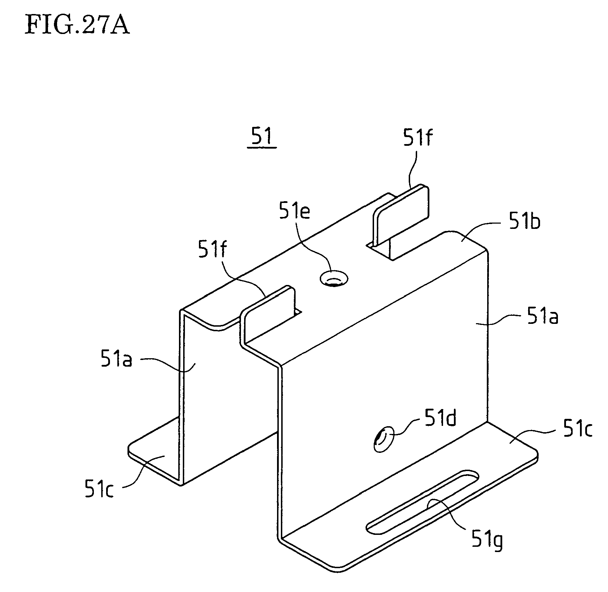

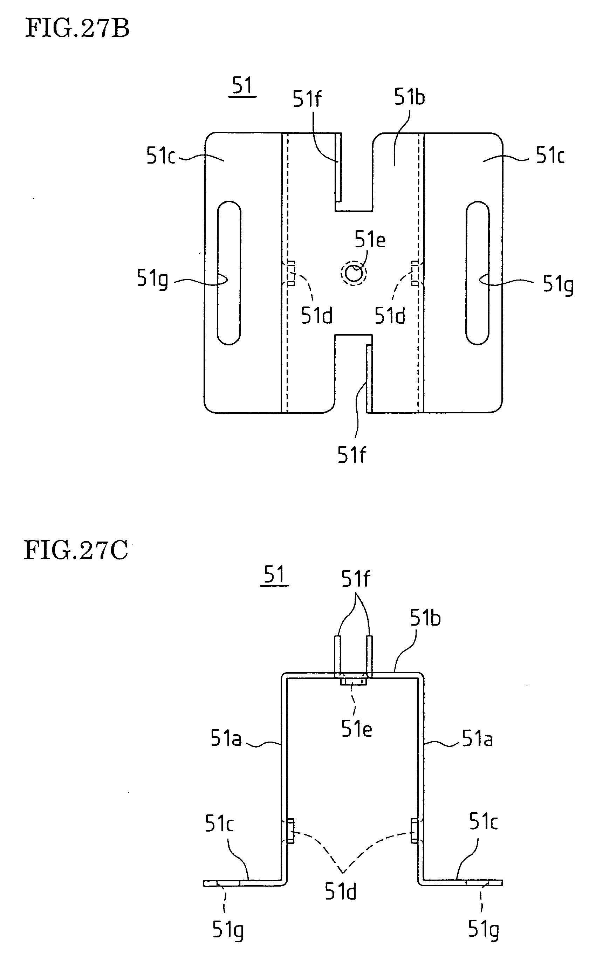

FIG. 27A is a perspective view showing a second connection member provided on the upper and lower horizontal cross-pieces 15 on the rear side of the solar cell module 17. FIGS. 27B and 27C are a plan view and a side view, respectively, showing the second connection member of FIG. 27A. The second connection member 51 includes a pair of side plates 51a facing each other, a top plate 51b linking sides facing each other of the side plates 51a, and brims 51c each of which is formed by bending an edge of the corresponding side plate 51a, protruding outward, and therefore, has a hat-shaped cross-section. The second connection member 51 is shaped and sized to fit into the inside of the horizontal cross-piece 15.

L-shaped cuts extending inward from both ends of the top plate 51b of the second connection member 51 are formed. The plates inside the L-shaped cuts are raised to an upright position to form protrusion portions 51f. A screw hole 51d is formed in each of the side plates 51a of the second connection member 51. A screw hole 51e is formed on a center line of the top plate 51b. An elongated hole 51g is formed in each brim 51c.

The second connection member 51 is also formed of a sufficiently thick steel plate, and therefore, has high strength, similar to the first connection member 41, the first fixing member 43, and the second fixing member 44.

The second connection member 51 is provided at each portion where a pair of slits 15d and a perforated hole 15e are formed, of the main plates 15b of the upper and lower horizontal cross-pieces 15, and is fitted into the inside of the horizontal cross-piece 15.

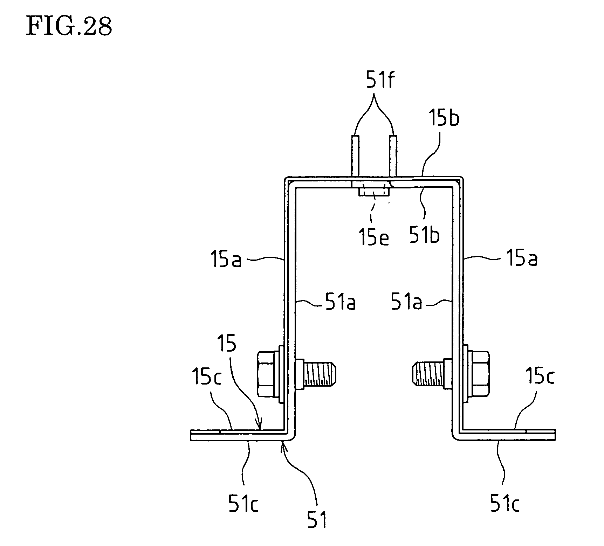

As shown in FIG. 28, when the second connection member 51 is fitted into the inside of the horizontal cross-piece 15, the protrusion portions 51f of the top plate 51b of the second connection member 51 protrude upward from the pair of slits 15d of the main plate 15b of the horizontal cross-piece 15.

The side plates 15a of the horizontal cross-piece 15 are put on top of the respective corresponding side plates 51a of the second connection member 51. The main plate 15b of the horizontal cross-piece 15 is put on top of the top plate 51b of the second connection member 51. The brims 15c of the horizontal cross-piece 15 are put on top of the respective corresponding brims 51c of the second connection member 51.

In this state, two bolts are screwed through the respective corresponding perforated holes 15f of the side plates 15a of the horizontal cross-piece 15 into the respective corresponding screw holes 51d of the side plates 51a of the second connection member 51. Therefore, the main plate, the side plate, and the brim have a two-layer structure at points where the second connection member 51 is provided, and therefore, the strength is high at the points.

Note that, in the rightmost (first) cross-piece members 151 of the upper and lower horizontal cross-pieces 15 of FIG. 1, as shown in FIGS. 7A and 7B a pair of slits 15d and a perforated hole 15e are formed at each of four points. Therefore, the second connection member 51 is provided at each of the four points. In the second and subsequent cross-piece members 152 of the horizontal cross-piece 15, as shown in FIG. 8 a pair of slits 15d and a perforated hole 15e are formed at each of three points. Therefore, the second connection member 51 is provided at each of the three points.

At both end portions of the cross-piece member 151 of FIGS. 7A and 7B, the elongated holes 51g of the brims 51c of the second connection member 51 coincide with the respective corresponding elongated holes 15g of the brims 15c of the cross-piece member 151. Also, at the one end portion of the cross-piece member 152 of FIG. 8, the elongated holes 51g of the brims 51c of the second connection member 51 coincide with the respective corresponding elongated holes 15g of the brims 15c of the cross-piece member 152. Therefore, the elongated holes 15g of the brims 15c of each of the cross-piece members 151, 152 are not covered by the brims 51c of the second connection member 51, and the length of the elongated holes 15g are not limited, and therefore, each of the cross-piece members 151, 152 is not prevented from moving along the elongated holes 15g.

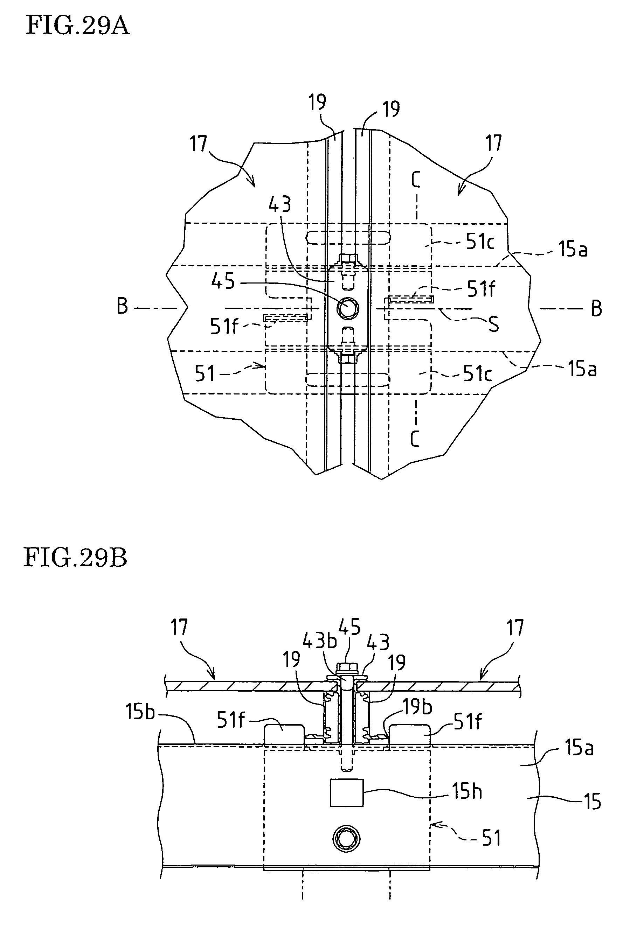

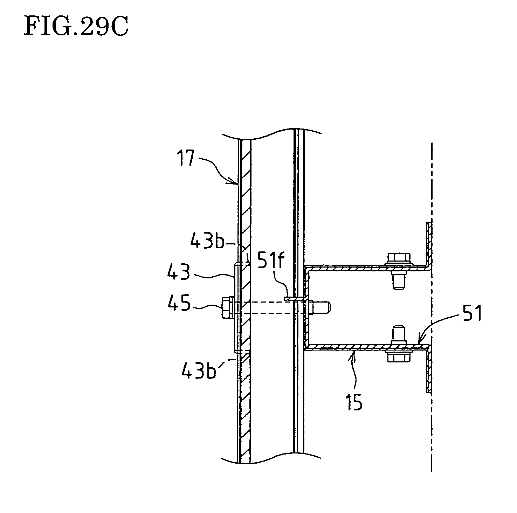

FIG. 29A is a plan view showing a state in which two (left and right) solar cell modules 17 are attached to the upper and lower horizontal cross-pieces 15 using the second connection member 51 and the first fixing member 43. FIG. 29B is a cross-sectional view taken along line B-B of FIG. 29A. FIG. 29C is a cross-sectional view taken along line C-C of FIG. 29A.

As shown in FIGS. 29A-29C, the frame members 19 of the left and right solar cell modules 17 are inserted between the protrusion strips 51f of the second connection member 51 and thus mounted on the main plate 15b of the horizontal cross-piece 15. Thereafter, the protrusion strips 43b of the first fixing member 43 are inserted between the frame members 19 of the left and right solar cell modules 17, whereby the frame members 19 of the solar cell modules 17 are spaced apart by a predetermined distance. At the same time, the bottom protrusion portions 19b of the frame members 19 of the solar cell modules 17 abut the protrusion strips 51f of the second connection member 51. As a result, the left-right positions of the solar cell modules 17 are determined.

Thereafter, a bolt 45 is inserted and fastened through the through hole 43c of the first fixing member 43, a gap between the frame members 19 of the solar cell modules 17, and the perforated hole 15e of the main plate 15b of the horizontal cross-piece 15 into the screw hole 51e of the top plate 51b of the second connection member 51. As a result, the frame members 19 of the solar cell modules 17 are sandwiched and fixed between the first fixing member 43 and the main plate 15b of the horizontal cross-piece 15.

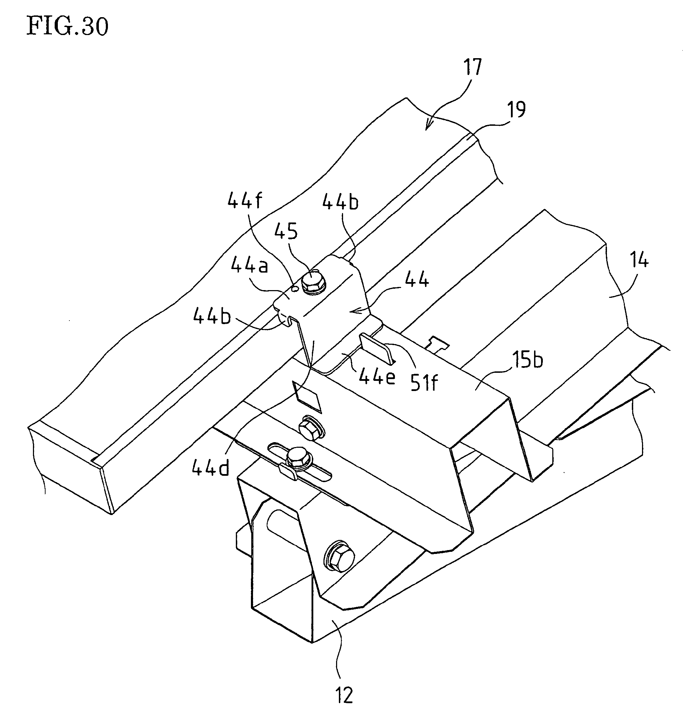

The second fixing member 44 is also used to fix two (upper and lower) rightmost or leftmost solar cell modules 17 of FIG. 1. As shown in FIG. 30, the rightmost or leftmost solar cell module 17 is mounted on the main plate 15b of the horizontal cross-piece 15 with the frame member 19 thereof being inserted between the protrusion portions 51f of the second connection member 51. Thereafter, the bottom strips 44e of the second fixing member 44 are put on the main plate 15b of the horizontal cross-piece 15. The protrusion strips 44b of the second fixing member 44 are pressed against the frame member 19 of the solar cell module 17. The bottom protrusion portion 19b of the frame member 19 of the solar cell module 17 abuts the protrusion portion 51f of the second connection member 51. As a result, the left-right position of the solar cell module 17 is determined. A bolt 45 is screwed and fastened through the through hole 44c of the second fixing member 44 and the perforated hole 15e of the main plate 15b of the horizontal cross-piece 15 into the screw hole 51e of the top plate 51b of the second connection member 51. As a result, the frame member 19 of the solar cell module 17 is sandwiched and fixed between the second fixing member 44 and the main plate 15b of the horizontal cross-piece 15.

In the solar cell module rack of this embodiment, a large number of solar cell modules 17 are mounted. If the solar cell modules 17 are separately connected to the ground using a wire or the like, the connecting work is troublesome.

Therefore, in the solar cell module rack of this embodiment, only the middle horizontal cross-piece 15 is connected to the ground using a wire or the like. Each solar cell module 17 is attached and fixed to the middle horizontal cross-piece 15 while conduction is established between the solar cell module 17 and the middle horizontal cross-piece 15 via the first fixing member 43 and the second fixing member 44, whereby the solar cell module 17 is grounded. Therefore, the solar cell modules 17 are grounded by only the work of connecting the middle horizontal cross-piece 15 to the ground using a wire or the like.

Next, a structure for grounding the solar cell module 17 in the above manner will be described.

As shown in FIGS. 21A-21C, the abutment plate 43a of the first fixing member 43 has two perforated holes 43d in addition to the through hole 43c. The perforated holes 43d are formed in the vicinity of the through hole 43c on both sides of a virtual line extending through centers of the protrusion strips 43b and the through hole 43c. Therefore, as shown in FIGS. 24A-24C or FIGS. 29A-29C, when the first fixing member 43 is put on the frame members 19 of the left and right solar cell modules 17 with the protrusion strips 43b thereof being inserted between the frame members 19, the perforated holes 43d are located directly above the respective corresponding frame members 19.

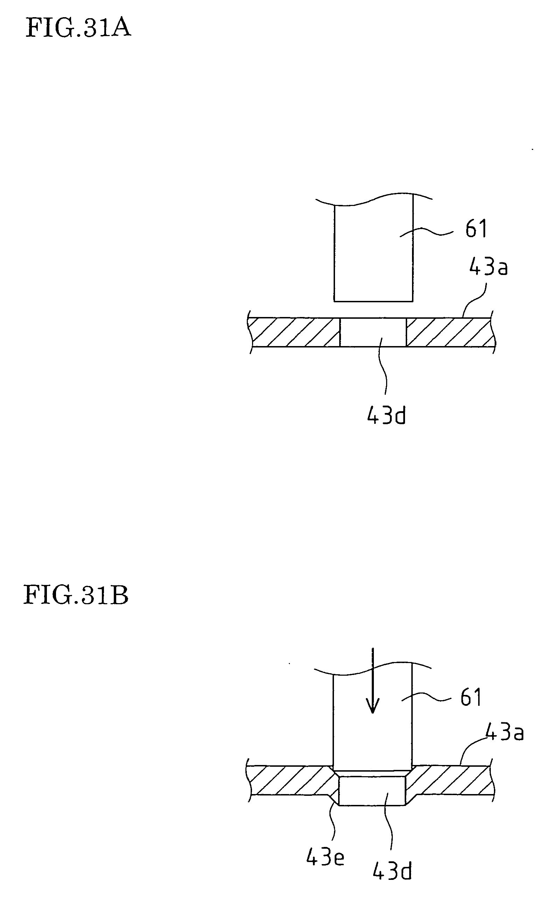

Each perforated hole 43d has a ring-shaped protrusion 43e having a sharp tip along an entire inner circumferential edge of the perforated hole 43d. In other words, the abutment plate (abutment portion) 43a has the ring-shaped protrusion 43e formed along the circumferential edge of the perforated hole 43d. The ring-shaped protrusion 43e with a sharp tip along the circumferential edge of the perforated hole 43d is formed as follows. For example, as shown in FIGS. 31A and 31B, the perforated hole 43d is formed in the abutment plate 43a of the first fixing member 43 using a drill etc. A pin 61 having an outer diameter slightly larger than the inner diameter of the perforated hole 43d is struck against the inner circumferential edge of the perforated hole 43d with great force, whereby the entire inner circumferential edge of the perforated hole 43d on a side opposite to the pin 61 is caused to protrude.

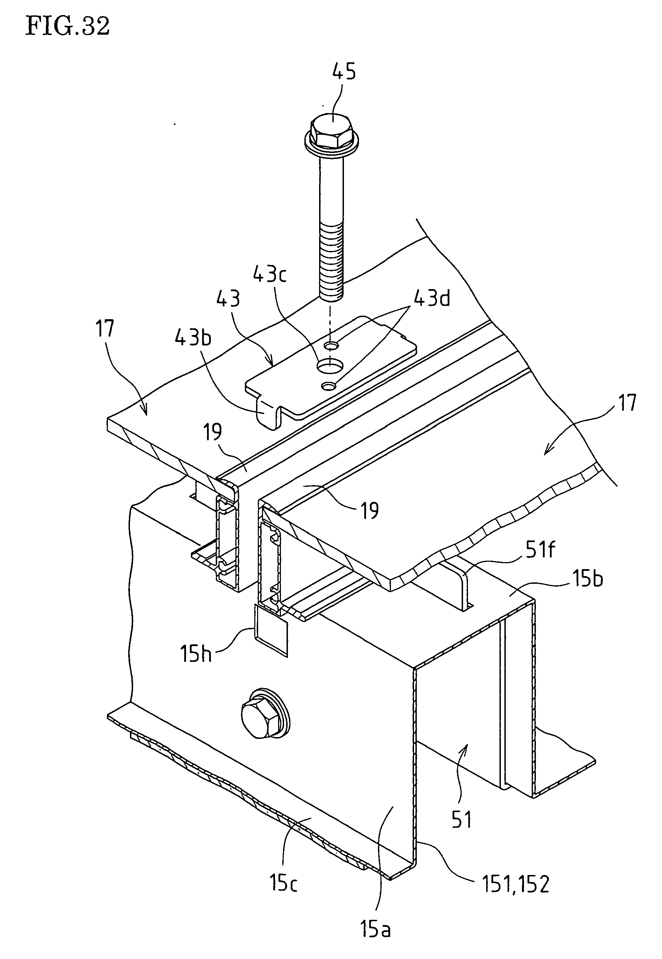

As can be seen from FIG. 32, when the abutment plate (abutment portion) 43a of the first fixing member 43 is put on the frame members 19 of the left and right solar cell modules 17 with the perforated holes 43d thereof being located directly above the respective corresponding frame members 19 of the solar cell modules 17, the ring-shaped protrusions 43e with a sharp tip along the circumferential edges of the perforated holes 43d protrude toward the frame members 19 of the solar cell modules 17.

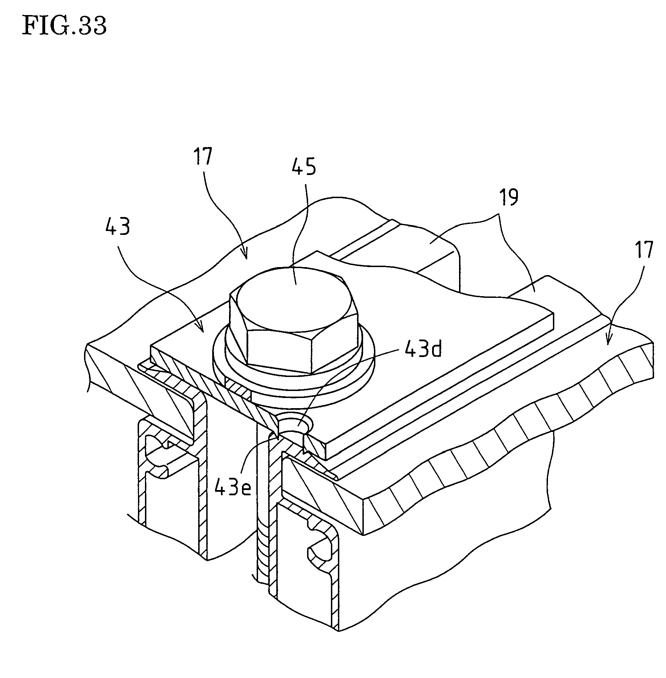

In this state, as shown in FIGS. 24A-24C, a bolt (fastening member) 45 is screwed and fastened through the through hole 43c of the first fixing member (fixing member) 43 and a gap between the frame members 19 of the left and right solar cell modules 17 into the screw hole 41d of the top plate 41b of the first connection member 41, whereby the frame member 19 of the solar cell module 17 is sandwiched and fixed between the first fixing member 43 and the main plate 15b of the horizontal cross-piece (rack member) 15. At the same time, as shown in FIG. 33, the ring-shaped protrusions 43e with a sharp tip along the circumferential edges of the perforated holes 43d of the first fixing member 43 dig into the respective corresponding frame members 19 of the left and right solar cell modules 17, so that conduction is established between the first fixing member 43 and the frame members 19 of the left and right solar cell modules 17.

Alternatively, as shown in FIGS. 29A-29C, a bolt 45 is screwed and fastened through the through hole 43c of the first fixing member 43 and a gap between the frame members 19 of the left and right solar cell modules 17 into the screw hole 51e of the top plate 51b of the second connection member 51, whereby the frame members 19 of the solar cell modules 17 are sandwiched and fixed between the first fixing member 43 and the main plate 15b of the horizontal cross-piece 15. At the same time, the ring-shaped protrusions 43e with a sharp tip along the circumferential edges of the perforated holes 43d of the first fixing member 43 dig into the respective corresponding frame members 19 of the left and right solar cell modules 17, so that conduction is established between the first fixing member 43 and the frame members 19 of the left and right solar cell modules 17.

The ring-shaped protrusions 43e of the perforated holes 43d of the first fixing member 43 are formed in the vicinity of the bolt 45. Therefore, the fastening force of the bolt 45 is reliably applied to the ring-shaped protrusions 43e of the perforated holes 43d, so that the ring-shaped protrusions 43e of the perforated holes 43d dig into the respective corresponding frame members 19 of the left and right solar cell modules 17, whereby conduction is established between the first fixing member 43 and the frame members 19 of the left and right solar cell modules 17.

For example, when the frame member 19 of the solar cell module 17 is made of aluminum or aluminum alloy, an insulating oxide film is formed on a surface of the aluminum or aluminum alloy. In other words, the frame member 19 of the solar cell module 17 is made of, for example, aluminum or aluminum alloy (metal material) covered with a surface oxide film (insulating oxide film) of the aluminum or aluminum alloy. Therefore, if the first fixing member 43 is only made in contact with the surface of the frame member 19, conduction is not established between the first fixing member 43 and the aluminum or aluminum alloy of the frame member 19. When the ring-shaped protrusion 43e with a sharp tip along the circumferential edge of the perforated hole 43d of the first fixing member 43 digs into the frame member 19 of the solar cell module 17, the ring-shaped protrusion 43e with a sharp tip along the circumferential edge of the perforated hole 43d of the first fixing member 43 breaks the insulating surface oxide film on the surface of the frame member 19 to abut the aluminum or aluminum alloy. Therefore, conduction is established between the first fixing member 43 and the aluminum or aluminum alloy of the frame member 19 of the solar cell module 17.

The first fixing member 43, the first connection member 41 or the second connection member 51, the horizontal cross-piece 15, etc. are made of a conductive material (conductor) such as a plated steel plate or a steel plate etc. The bolt 45 is also made of a conductive material such as steel etc. These are firmly joined together. Therefore, when conduction is established between the first fixing member 43 and the frame member 19 of the solar cell module 17, conduction is also established between the frame member 19 of the solar cell module 17 and the horizontal cross-piece 15 via the first fixing member 43, the bolt 45, and the first connection member 41 or the second connection member 51.

On the other hand, as shown in FIGS. 22A and 22B, similar to the first fixing member 43, two perforated holes 44f are formed in the abutment plate 44a of the second fixing member 44 in addition to the through hole 44c. The two perforated holes 44f are formed at two points in the vicinity of the through hole 44c. As shown in FIG. 26 or 30, when the abutment plate 44a of the second fixing member 44 is put on the frame member 19 of the rightmost or leftmost solar cell module 17 with the protrusion strips 44b of the second fixing member 44 being pressed against the frame member 19 of the solar cell module 17, the perforated holes 44f are located directly above the frame member 19 of the solar cell module 17.

Each perforated hole 44f of the second fixing member 44 has a ring-shaped protrusion 44g with a sharp tip along an entire inner circumferential edge of the perforated hole 44f. In other words, the abutment plate (abutment portion) 44a has the ring-shaped protrusion 44g formed along the circumferential edge of the perforated hole 44f. The ring-shaped protrusion 44g with a sharp tip along the circumferential edge of the perforated hole 44f is formed in a manner similar to that of the ring-shaped protrusion 43e with a sharp tip along the circumferential edge of the perforated hole 43d of the first fixing member 43.

As shown in FIG. 26 or 30, when the abutment plate (abutment portion) 44a of the second fixing member 44 is put on the frame member 19 of the solar cell module 17 with the perforated holes 44f being located directly above the frame member 19 of the solar cell module 17, the ring-shaped protrusions 44g with a sharp tip along the circumferential edges of the perforated holes 44f protrude toward the frame member 19 of the solar cell module 17.

In this state, as shown in FIG. 26, a bolt (fastening member) 45 is screwed and fastened through the through hole 44c of the second fixing member (fixing member) 44 into the screw hole 41d of the top plate 41b of the first connection member 41, whereby the frame member 19 of the solar cell module 17 is sandwiched and fixed between the second fixing member 44 and the main plate 15b of the horizontal cross-piece (rack member) 15. At the same time, the ring-shaped protrusions 44g with a sharp tip along the circumferential edges of the perforated holes 44f of the second fixing member 44 dig into the frame member 19 of the solar cell module 17, so that conduction is established between the second fixing member 44 and the frame member 19 of the solar cell module 17.

Alternatively, as shown in FIG. 30, a bolt 45 is screwed and fastened through the through hole 44c of the second fixing member 44 into the screw hole 51e of the top plate 51b of the second connection member 51, whereby the frame member 19 of the solar cell module 17 is sandwiched and fixed between the second fixing member 44 and the main plate 15b of the horizontal cross-piece 15. At the same time, the ring-shaped protrusions 44g with a sharp tip along the circumferential edges of the perforated holes 44f of the second fixing member 44 break the insulating oxide film of the frame member 19 to dig into the frame member 19, so that conduction is established between the second fixing member 44 and the frame member 19 of the solar cell module 17.

The ring-shaped protrusions 44g of the perforated holes 44f of the second fixing member 44 are formed in the vicinity of the bolt 45. Therefore, the fastening force of the bolt 45 is reliably applied to the ring-shaped protrusions 44g of the perforated holes 44f, so that the ring-shaped protrusions 44g of the perforated holes 44f dig into the frame member 19 of the solar cell module 17, whereby conduction is established between the second fixing member 44 and the frame member 19 of the solar cell module 17.

The second fixing member 44, the first connection member 41 or the second connection member 51, the horizontal cross-piece 15, etc. are made of a conductive material such as a plated steel plate or a steel plate etc. The bolt 45 is also made of a conductive material such as steel etc. These are firmly joined together. Therefore, when conduction is established between the second fixing member 44 and the frame member 19 of the solar cell module 17, conduction is also established between the frame member 19 of the solar cell module 17 and the horizontal cross-piece 15 via the second fixing member 44, the bolt 45, and the first connection member 41 or the second connection member 51.

Thus, when the first fixing member 43 and the second fixing member 44 are put on the frame member 19 of the solar cell module 17 and fastened using the bolt 45, the ring-shaped protrusions 43e and 44g of the perforated holes 43d and 44f dig into the frame member 19 of the solar cell module 17, so that conduction is established between the first and second fixing members 43 and 44 and the frame member 19 of the solar cell module 17, and therefore, conduction is also established between the frame member 19 of the solar cell module 17 and the middle horizontal cross-piece 15.

Therefore, if only the middle horizontal cross-piece 15 is connected to the ground using a wire or the like, then when the solar cell module 17 is attached and fixed to the middle horizontal cross-piece 15 using the first fixing member 43 and the second fixing member 44, conduction is established between the frame member 19 of the solar cell module 17 and the middle horizontal cross-piece 15, whereby the frame member 19 of the solar cell module 17 can be grounded. Because the solar cell module rack is formed by combining and joining a plurality of conductive cross-pieces, arms, trusses, etc., the entire solar cell module rack is grounded by grounding the middle horizontal cross-piece 15.

The ring-shaped protrusions 43e and 44g of the perforated holes 43d and 44f of the first fixing member 43 and the second fixing member 44 are each in the shape of a ring formed along the entire inner circumferential edge of the perforated hole. Therefore, even if force that tries to cause the ring-shaped protrusion 43e, 44g to fall down is applied thereto in any direction, the force can be spread or distributed throughout the ring-shaped protrusion 43e, 44g, and the ring-shaped protrusion 43e, 44g has high strength against force in any direction. Therefore, even if the position of the solar cell module 17 is adjusted or the solar cell module 17 is displaced by impact after the ring-shaped protrusion 43e, 44g of the perforated hole 43d, 44f digs into the frame member 19 of the solar cell module 17, the ring-shaped protrusion 43e, 44g does not fall down or is not broken. Therefore, conduction between the first and second fixing members 43 and 44 and the frame member 19 of the solar cell module 17 is not interrupted, and therefore, the grounding of the solar cell module 17 can be stably maintained.

Note that the first fixing member 43 is used to fix all the frame members 19 of the solar cell modules 17 to the middle horizontal cross-piece 15. Therefore, the ring-shaped protrusion 43e of the perforated hole 43d may be formed only in the first fixing member 43, and the ring-shaped protrusion 44g of the perforated hole 44f may not be formed in the second fixing member 44, and even in this case, conduction can be established between the frame member 19 of the solar cell module 17 and the middle horizontal cross-piece 15.

The first fixing member 43 is used not only to fix all the frame members 19 of the solar cell modules 17 to the middle horizontal cross-piece 15, but also to fix the frame members 19 of the solar cell modules 17 to the upper and lower horizontal cross-pieces 15. Therefore, one or two of the upper, lower, and middle horizontal cross-pieces 15 may be selectively grounded.

The numbers of the perforated holes 43d and 44f of the first fixing member 43 and the second fixing member 44 may be increased or decreased, depending on the number of points of the frame member 19 of the solar cell module 17 into which the ring-shaped protrusion 43e, 44f digs. The shape of the perforated hole 43d, 44f is not limited to a circle and may be an ellipse etc., and the size is also not limited. Typically, as the number of perforated holes increases or as the size of the perforated hole increases, conduction is more stably established between the frame member 19 of the solar cell module 17 and the solar cell module rack.

The differences between diameters of the through holes 43c and 44c of the first fixing member 43 and the second fixing member 44 and a diameter of the bolt 45 are assumed to be the maximum values of the displacement widths of the first fixing member 43 and the second fixing member 44. In this case, if the diameter of the perforated hole 43d, 44f is larger than the maximum value of the displacement width, even when the bolt 45 is refastened, the mark left by the previous digging of the ring-shaped protrusion 43e, 44g of the perforated hole 43d, 44f intersects or overlaps the mark formed by the current digging of the ring-shaped protrusion 43e, 44g after refastening, and therefore, conduction can be reliably maintained.

For example, if it is assumed that the diameter of the through hole 43c, 44c is 11 mm and the diameter of the bolt 45 is 8 mm, the difference between these diameters is 3 mm, and therefore, in this case, the diameter of the perforated hole 43d, 44f is preferably 5 mm.

The embodiments described above are intended to clarify the present invention and are not intended to limit the present invention to those specific examples. The present invention should be construed as including all such modifications and alternatives insofar as they come within the scope of the present invention.

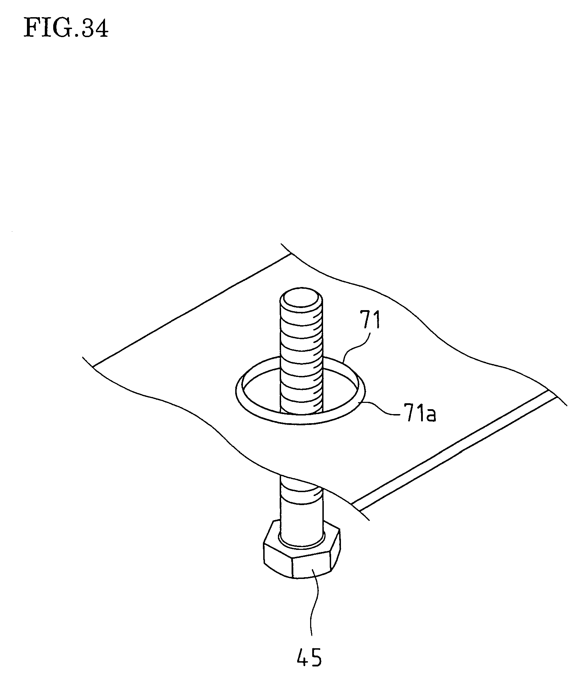

For example, as shown in FIG. 34, the diameter of a perforated hole 71 of a fixing member through which the bolt 45 is inserted may be larger than the diameter of the screw hole of the bolt 45. A ring-shaped protrusion 71a with a sharp tip may be formed along an entire inner circumferential edge of the perforated hole 71. The ring-shaped protrusion 71a may abut the frame member of the solar cell module.

Also, for example, in the solar cell module rack of the above embodiment, at least a portion of the perforated holes 43d of the first fixing members 43 and the perforated holes 44f of the second fixing members 44 may be removed. The first fixing member 43 (or the second fixing member 44) having such a structure can be produced by joining a flat plate to a surface opposite to the surface of the abutment plate 43a (or the abutment plate 44a) abutting the frame member 19 of the solar cell module 17 so that the perforated hole 43d (or the perforated hole 44f) is covered.

Also, for example, in the photovoltaic power generation system, the number of solar cell modules fixed to the solar cell module rack is not particularly limited and may be one.

### Reference Signs List

- 11: CONCRETE FOUNDATION
- 12: BASE CROSS-PIECE
- 13: ARM
- 14: VERTICAL CROSS-PIECE
- 15: HORIZONTAL CROSS-PIECE(RACK MEMBER)
- 16: TRUSS
- 17: SOLAR CELL MODULE
- 18: SOLAR CELL PANEL
- 19: FRAME MEMBER
- 21, 26, 32, 45: BOLT (FASTENING MEMBER)
- 22: U-SHAPED REINFORCEMENT MEMBER
- 25: PIPE
- 27: NUT
- 31: ATTACHMENT MEMBER
- 41: FIRST CONNECTION MEMBER
- 43: FIRST FIXING MEMBER (FIXING MEMBER)
- 43d, 44f: PERFORATED HOLE
- 43e, 44g: RING-SHAPED PROTRUSION
- 44: SECOND FIXING MEMBER (FIXING MEMBER)
- 51: SECOND CONNECTION MEMBER

## Claims

1. A solar cell module rack for mounting a solar cell module including a frame, comprising:
a fixing member mounted on and above the frame of the solar cell module;
a rack member mounted on and below the frame of the solar cell module; and
a fastening member configured to fasten the fixing member and the rack member together so that the fixing member and the rack member sandwich the frame of the solar cell module,
wherein
the fixing member includes an abutment portion that abuts the frame of the solar cell module, and
the abutment portion of the fixing member includes a ring-shaped protrusion protruding toward the frame of the solar cell module.

2. The solar cell module rack according to claim 1, wherein
the fixing member includes a perforated hole, and
the ring-shaped protrusion is formed along a circumferential edge of the perforated hole.

3. The solar cell module rack according to claim 2, wherein
the fixing member includes a through hole through which the fastening member is inserted, and
the perforated hole is located around the through hole.

4. The solar cell module rack according to claim 2, wherein
the fixing member includes a through hole through which the fastening member is inserted, and
the through hole is the perforated hole.

5. The solar cell module rack according to any one of claims 1-4, wherein
the rack member is a cross-piece on which the frame of the solar cell module is mounted.

6. A solar cell module fixing member for fixing a solar cell module by pressing a frame of the solar cell module, wherein
the fixing member includes an abutment portion that abuts the frame of the solar cell module, and
the abutment portion of the fixing member includes a ring-shaped protrusion protruding toward the frame of the solar cell module.

7. The solar cell module fixing member according to claim 6, wherein
the fixing member includes a perforated hole, and
the ring-shaped protrusion is formed along a circumferential edge of the perforated hole.

8. A photovoltaic power generation system comprising:
a solar cell module including a frame; and
the solar cell module rack according to any one of claims 1-5.

9. The photovoltaic power generation system according to claim 8, wherein
there are a plurality of the solar cell modules, and the frames of the solar cell modules are each sandwiched and supported by the fixing member and the rack member.

10. The photovoltaic power generation system according to claim 8 or 9, wherein
the fastening member fastens the fixing member and the rack member together with the ring-shaped protrusion of the fixing member digging into the frame of the solar cell module.

11. The photovoltaic power generation system according to claim 10, wherein
the frame of the solar cell module is formed of a metal material covered with an insulating oxide film,
the fixing member is formed of a conductive material, and
the fastening member fastens the fixing member and the rack member together with the ring-shaped protrusion of the fixing member breaking the oxide film of the frame of the solar cell module to abut the metal material of the frame of the solar cell module.

12. The photovoltaic power generation system according to claim 11, wherein
the metal material is made of aluminum or aluminum alloy,
the insulating oxide film is a surface oxide film made of aluminum or aluminum alloy, and
the conductive material is made of a plated steel plate or a steel plate.

13. The photovoltaic power generation system according to claim 11 or 12, wherein
the fixing member is grounded.
